# EUROPEAN PATENT SPECIFICATION

(11) **EP 2 093 109 B1**
(45) Date of publication and mention of the grant of the patent: **16.02.2011**
(21) Application number: 09002362.3
(22) Date of filing: 19.02.2009
(51) Int. Cl.: B60R 21/0136

(54) **Pedestrian collision detection apparatus and pedestrian protection system**
Vorrichtung zur Erkennung eines Zusammenstoßes mit einem Fußgänger und System zum Schutz von Fußgängern
Appareil de détection de collision de piétons et système de protection de piétons

(30) Priority: 21.02.2008 JP 2008040048; 21.02.2008 JP 2008040049
(43) Date of publication of application: 26.08.2009
(73) Proprietor: Keihin Corporation, Shinjuku-ku, Tokyo (JP)
(72) Inventor: Yuan, Fang c/o Keihin Corporation, Shioya-gun Tochigi-ken (JP)
(74) Representative: Eisenführ, Speiser & Partner

(56) References cited:
- EP-A- 0 937 612
- WO-A-03/082639
- DE-A1-102005 049 780
- DE-A1-102006 001 366
- JP-A- 2006 290 292
- US-A1- 2002 043 417
- US-A1- 2006 224 289

## Description

### BACKGROUND OF THE INVENTION

### Field of the Invention

The present invention relates to a pedestrian collision detection apparatus and a pedestrian protection system.

### Description of the Related Art

When a traveling motor vehicle collides with a pedestrian, a front bumper of the motor vehicle collides with a lower body of the pedestrian. As a result, the pedestrian may suffer from serious injury after being hit onto a hood of the motor vehicle and having his or her head hit hard against a hood surface. In particular, in the case of front-engine motor vehicle, design restrictions allow insufficient space between the hood (engine hood) and parts arranged in the engine room, thus leading to a larger degree of impact on the head. To alleviate the injury of a pedestrian when a collision has occurred between a motor vehicle and the pedestrian in this manner, techniques have been developed in which a rear end of an engine hood is lifted when a motor vehicle collides with a pedestrian to produce a space between the engine hood and parts arranged in an engine room, to thereby alleviate an impact on the head of the pedestrian.

The European patent application 0 937 612 discloses a pedestrian collision detection apparatus for vehicles according to the preamble of claim 1. This pedestrian collision detection apparatus enables a prediction of the collision objects. That means the discrimination between the collision with the pedestrian and the collision with the vehicle or other obstacles is predicted. Furthermore, the deformed amount of the collided portion is detected and the collision object is presumed on the basis of the deformed amount of the collided portion and the vehicle speed before or when the vehicle collided.

The US patent application 2002/0043417 shows an obstruction interference apparatus for a vehicle for inferring the type of an obstruction which the vehicle has hit. The apparatus comprises a deformable member which deforms in correspondence with an impact force with which the vehicle hits the obstruction. Thereby, the deformation rate differs in dependence of the type of the obstruction, for example the weight of the obstruction.

A pedestrian detection system for a vehicle is shown in the US patent application 2006/0224289. A vehicle is provided comprising a bumper with acceleration sensors. Acceleration sensors detect a variation in the acceleration and output signals depending on the detected variations. A calculation unit may detect the position of the object and determines whether the body is a body of a pedestrian. Furthermore, a vehicle speed sensor is connected with calculation unit.

The patent abstract of Japan JP 2006-290292 discloses a pedestrian collision determination device which determines whether the object collided with a vehicle is a pedestrian or a heavy obstacle. For this purpose, a sensor is arranged on the front part of the vehicle.

The German patent application DE 10 2006 001 366 shows a method and an apparatus for detecting the collision of a pedestrian. Several, especially three, sensors are positioned on the front part of a vehicle. In dependence on the location of the impact of the pedestrian, the emission of signals of sensors is time shifted. That means, first of all, said sensor which is positioned closest to the location of the impact emits a respective signal. A computer analyzes the signals of sensors and activates protective means.

An apparatus for detecting an impact of a pedestrian is known from the German patent application DE 10 2005 049 780. Sensors are arranged on the front part of a vehicle. Sensors are connected with a control unit, control unit analyzing the signals of sensors. Control unit may activate protective means like lifting the engine hood and inflating airbags.

An impact detector for detecting and evaluating an impact is disclosed in the International application 03/082639. The impact detector generates an output signal to deploy a pedestrian protection system. Pedestrian protection system comprises a sensor arrangement mounted at the front of the vehicle to detect an impact. Furthermore, an evaluator is provided for evaluating the output of sensor arrangement and for generating an output signal when a predetermined threshold is exceeded. Only when the threshold is exceeded pedestrian protection system is actuated.

For example, Japanese Unexamined Patent Publication, First Publication No. H09-315266 discloses a hood apparatus for a motor vehicle which lifts a hood by a predetermined amount when a traveling motor vehicle collides with a pedestrian and which maintains the hood at the lifted position. Furthermore, Japanese Unexamined Patent Publication, First Publication No. 2002-87204 discloses a sensor system for a motor vehicle in which first to third bumper sensors (acceleration sensors) are provided on a front bumper of a motor vehicle. According to the sensor system for a motor vehicle, an actuator is actuated to lift a hood when either one of the sum of a transformation velocity calculated based on an output signal of the first bumper sensor to a transformation velocity calculated based on an output signal of the second bumper sensor; and the sum of a transformation velocity calculated based on an output signal of the second bumper sensor to a transformation velocity calculated based on an output signal of the third bumper sensor exceeds a corresponding predetermined threshold value.

As described above, in the conventional techniques (especially in the technique disclosed in Japanese Unexamined Patent Publication, First Publication No. 2002-87204), it is determined that a collision with a pedestrian has occurred and then a hood is lifted when the sum of transformation velocities calculated based on output signals of three acceleration sensors (a first bumper sensor to a third bumper sensor), which are arranged in a width direction of a front bumper of a motor vehicle, exceeds a predetermined threshold value.

However, the acceleration detected in a front end portion of a motor vehicle at the time of collision is subject to great change due to factors such as the weight of the pedestrian and a traveling condition of the motor vehicle. As a result, if a determination of collision is made based on a comparison between a sum of transformation velocities and a given threshold value as in the above conventional techniques, there may be cases where a collision is not correctly determined. For example, there is a great difference in acceleration change between the case of collision with an adult and the case of collision with a child, even if the vehicle velocity is the same. As a result, it is difficult to correctly determine a collision based on a simple threshold value determination. Furthermore, it is difficult to discriminate an acceleration change by a collision with a lightweight pedestrian (child) from that by vibration while the motor vehicle is traveling on a bad road or during operation of an ABS. As a result, a hood may be lifted while the motor vehicle is traveling due to an erroneous determination, or the hood may not be lifted even if the vehicle has actually collided with a pedestrian (child).

The present invention has been achieved in view of the above circumstances, and has an object to provide a pedestrian collision detection apparatus capable of correctly determining collision with a pedestrian irrespective of the weight of the pedestrian, the site of collision, and the traveling conditions of a motor vehicle, and has another object to provide a pedestrian protection system provided with the pedestrian collision detection apparatus, capable of securely protecting a pedestrian at the time of collision.

### SUMMARY OF THE INVENTION

A pedestrian collision detection apparatus according to the present invention includes: a plurality of acceleration sensors (10L, 10C, 10R) installed in a front end portion (110) of a motor vehicle (100); integral circuits (33L, 33C, 33R, 34L, 34C, 34R, 35L, 35C, 35R) that integrate output signals of respective acceleration sensors (10L, 10C, 10R); collision determination threshold value setting circuits (36, 37) that set a collision determination threshold value for each of the acceleration sensors (10L, 10C, 10R) in accordance with a characteristic of a pedestrian and output change factor of the acceleration sensors (10L, 10C, 10R), the characteristic and the output change factor being identified based on a relationship among integral values that are calculated by the integral circuits (33L, 33C, 33R, 34L, 34C, 34R, 35L, 35C, 35R) and correspond to the respective acceleration sensors (10L, 10C, 10R); and a collision determination circuit (40) that compares the integral values, calculated by the integral circuits (33L, 33C, 33R, 34L, 34C, 34R, 35L, 35C, 35R) and corresponding to the respective acceleration sensors (10L, 10C, 10R), with the collision determination threshold values that are set by the collision determination threshold value setting circuits (36, 37), and determines that the motor vehicle (100) has collided with a pedestrian if at least one of the integral values corresponding to the acceleration sensors (10L, 10C, 10R) exceeds the corresponding collision determination threshold value.

A vehicle velocity sensor (20) is arranged that detects a vehicle velocity of the motor vehicle (100), wherein the collision determination threshold value setting circuits (36, 37) includes: a data processing circuit (36) which maintains the integral values calculated by the integral circuits (33L, 33C, 33R, 34L, 34C, 34R, 35L, 35C, 35R) and corresponding to the respective acceleration sensors (10L, 10C, 10R), so that the respective integral values are at maximum values thereof, and sets a difference between the greatest value and the smallest value among the maximum values of the integral values to a value of a first variant and sets the smallest value to a value of a second variant; and a threshold value setting circuit (37) that, on a two-dimensional map made of a first axis related to the first variant and a second axis related to the second variant, sets a plurality of weight regions classified by the weight of the pedestrian along the second axis, in accordance with the vehicle velocity of the vehicle velocity sensor (20), and that sets a pedestrian identification threshold value for identifying whether or not the output change factor of the acceleration sensors (10L, 10C, 10R) is a collision with a pedestrian along the first axis for each of the weight regions and sets the collision determination threshold value for each of the acceleration sensors (10L, 10C, 10R) in accordance with the values of the first and second variants on the two-dimensional map which are set by the data processing circuit (36).

The integral circuits (33L, 33C, 33R, 34L, 34C, 34R, 35L, 35C, 35R) includes: short interval integral circuits (33L, 33C, 33R) that integrate the respective output signals of the acceleration sensors (10L, 10C, 10R) over a predetermined time interval; long interval integral circuits (34L, 34C, 34R) that integrate the respective output signals of the acceleration sensors (10L, 10C, 10R) over a time interval longer than the predetermined time interval; and longest interval integral circuits (35L, 35C, 35R) that integrate the respective output signals of the acceleration sensors (10L, 10C, 10R) over a time interval that is required for monitoring a collision with a pedestrian at least during operation of the apparatus itself; the data processing circuit (36) sets values of the first and second variants based on integral values which are calculated by the longest interval integral circuits (35L, 35C, 35R) and correspond to the acceleration sensors (10L, 10C, 10R); the threshold value setting circuit (37) sets, in accordance with the values of the first and second variants on the two-dimensional map that are set by the data processing circuit (36), a short interval collision determination threshold value and a long interval collision determination threshold value for each of the acceleration sensors (10L, 10C, 10R), a short interval collision determination threshold value being for comparison with the integral values which are calculated by the short interval integral circuits (33L, 33C, 33R) and correspond to the acceleration sensors (10L, 10C, 10R), and the long interval collision determination threshold value being for comparison with the integral values which are calculated by the long interval integral circuits (34L, 34C, 34R) and correspond to the acceleration sensors (10L, 10C, 10R); and the collision determination circuit (40) includes: short interval comparison circuits (38L, 38C, 38R) that compare the integral values, calculated by the short interval integral circuits (33L, 33C, 33R) and corresponding to the acceleration sensors (10L, 10C, 10R), with the short interval collision determination threshold value which is set by the threshold value setting circuit (37); long interval comparison circuits (39L, 39C, 39R) that compare the integral values, calculated by the long interval integral circuits (34L, 34C, 34R) and corresponding to the acceleration sensors (10L, 10C, 10R), with the long interval collision determination threshold value which is set by the threshold value setting circuit; and a determination circuit (40) that determines that there has been a collision with a pedestrian if at least one of the integral values corresponding to the acceleration sensors (10L, 10C, 10R) from the short interval comparison circuits (38L, 38C, 38R) and the long interval comparison circuit (39L, 39C, 39R) is determined to have exceeded either the short interval collision determination threshold value or the long interval collision determination threshold value.

It may be arranged such that the pedestrian collision detection apparatus according to the present invention further includes filters (32L, 32C, 32R) for removing noise due to vibration while the motor vehicle (100) is traveling, the noise being superimposed on the output signals of the acceleration sensors (10L, 10C, 10R).

In addition, the pedestrian protection system according to the present invention is a pedestrian protection system that lifts a hood (130) provided to the motor vehicle (100) when a front end portion of a motor vehicle (100) collides with a pedestrian, to thereby alleviate an injury of the pedestrian, the pedestrian protection system including: an actuator (50) for lifting the hood (130); the pedestrian collision detection apparatus according to the first aspect of the present invention; and a control apparatus (41) that controls the actuator (50), to thereby lift the hood (130) if the pedestrian collision detection apparatus determines that there has been a collision with the pedestrian.

In the pedestrian collision detection apparatus according to the present invention, a collision determination threshold value is set for each of the acceleration sensors according to the weight of the pedestrian and the output change factor of the acceleration sensors, the weight and the output change factor being identified based on the relationship among the integral values of a plurality of acceleration sensors installed in the front end portion of the motor vehicle.

Between a heavyweight pedestrian and a lightweight pedestrian, there is a difference in output change of the acceleration sensors when the vehicle collides with the pedestrian. Furthermore, when the motor vehicle collides with a pedestrian, a local plastic deformation at the collision site is dominant. At positions away from the collision site, a vibration and an elastic deflection are produced due to the collision. Therefore, a difference in output change occurs between the acceleration sensor installed closest to the collision site and the acceleration sensor installed away from the collision site. On the other hand, a vibration while the motor vehicle is traveling on a bad road or during the operation of an ABS causes the front end portion of the motor vehicle to vibrate in a similar manner. Therefore, the output changes of the acceleration sensors have the same characteristic. That is, according to the pedestrian collision detection apparatus according to the invention, it is possible to identify the weight of the pedestrian and the output change factor of the acceleration sensors based on the relationship among the integral values of the output signals of the acceleration sensors. Therefore, it is possible to set a collision determination threshold value according to this identification result. As a result, it is possible to correctly detect a collision with a pedestrian irrespective of the weight of the pedestrian and the traveling condition of the motor vehicle. Furthermore, according to the pedestrian protection system according to the invention, provision of the above pedestrian collision detection apparatus makes it possible to securely protect a pedestrian at the time of collision.

Furthermore, a pedestrian collision detection apparatus may include: a plurality of acceleration sensors (510L, 510C, 510R) provided to a front end portion (610) of a motor vehicle (600); collision determination threshold value selection circuits (535L, 535C, 535R) provided in correspondence to the acceleration sensors (510L, 510C, 510R), each of which selects a collision determination threshold value with respect to the corresponding acceleration sensor in accordance with an output change factor of the acceleration sensors (510L, 510C, 510R) identified based on a relationship between an integral value of an output signal of the corresponding acceleration sensor and integral values of output signals of the other acceleration sensors; integral circuits (533L, 533C, 533R) provided in correspondence to the acceleration sensors (510L, 510C, 510R), each of which integrates an output signal of the corresponding acceleration sensor; comparison circuits (536L, 536C, 536R) provided in correspondence to the acceleration sensors (510L, 510C, 510R), each of which compares an integral value calculated by the integral circuit of the corresponding acceleration sensor with the collision determination threshold value selected by the collision determination threshold value selection circuit of the corresponding acceleration sensor; and a collision determination circuit (539) which determines that there has been a collision with a pedestrian if at least one of the integral values corresponding to the acceleration sensors (510L, 510C, 510R) has exceeded the collision determination threshold value based on a comparison determination by the comparison circuits (536L, 536C, 536R).

It may be arranged such that the pedestrian collision detection apparatus further includes a vehicle velocity sensor (520) that detects a vehicle velocity of the motor vehicle (600), wherein each of the collision determination threshold value selection circuits (535L, 535C, 535R) includes: a main integral circuit (550) that integrates an output signal of the corresponding acceleration sensor; sub integral circuits (551, 552) that integrate output signals of the other acceleration sensors; a main threshold value setting circuit (553) that sets a main circuit high-side threshold value and a main circuit low-side threshold value for comparison with an integral value calculated by the main integral circuit (550) in accordance with a vehicle velocity detected by the vehicle velocity sensor (520); sub threshold value setting circuits (554, 555) that set sub circuit threshold values corresponding to each of the other acceleration sensors, the sub circuit threshold values being for comparison with integral values calculated by the sub integral circuits (551, 552) according to a vehicle velocity detected by the vehicle velocity sensor (520); an output change factor identification circuit (556, 557, 558, 559, 560) that identifies an output change factor of the acceleration sensors (510L, 510C, 510R) by determining whether or not the integral values calculated by all the sub integral circuits (551, 552) have exceeded the corresponding sub circuit threshold value in a period from a time when the integral value calculated by the main integral circuit (550) exceeds the main circuit high-side threshold value to a time when the integral value reaches the main circuit low-side threshold value; a determination threshold value setting circuit (561) that sets the collision determination threshold value with respect to the corresponding acceleration sensor for each of the output change factors, in accordance with a vehicle velocity detected by the vehicle velocity sensor (520); and a selection circuit(562) that selects a collision determination threshold value corresponding to an identification result of the output change factor by the output change factor identification circuit (556, 557, 558,559,560) from the collision determination threshold values that are set by the determination threshold value setting circuit (561).

It may be arranged such that in the period from the time when the integral value calculated by the main integral circuit (550) exceeds the main circuit high-side threshold value to the time when the integral value reaches the main circuit low-side threshold value, if the integral values calculated by all the sub integral circuits (551, 552) have exceeded the corresponding sub circuit threshold value, then the output change factor identification circuit (556, 557,558, 559, 560) identifies that the output change factor of the acceleration sensors (510L, 510C, 510R) is other than a collision with a pedestrian, while if at least one of the integral values calculated by the sub integral circuits (551, 552) does not exceed the corresponding sub circuit threshold value, then the output change factor identification circuit (556,557, 558, 559, 560) identifies that the output change factor of the acceleration sensors (510L, 510C, 510R) is a collision with a pedestrian.

It may be arranged such that the pedestrian collision detection apparatus further includes filters (532L, 532C, 532R) for removing noise due to vibration while the motor vehicle (600) is traveling, the noise being superimposed on the output signals of the acceleration sensors (510L, 510C, 510R).

In addition, the pedestrian protection system is a pedestrian protection system that if a front end portion of a motor vehicle (600) collides with a pedestrian, lifts a hood (630) provided to the motor vehicle (600), to thereby alleviate an injury of the pedestrian, the pedestrian protection system including: an actuator (580) for lifting the hood (630); the pedestrian collision detection apparatus; and a control apparatus (540) that controls the actuator (580), to thereby lift the hood (630) if the pedestrian collision detection apparatus determines that there has been a collision with the pedestrian.

The pedestrian collision detection apparatus includes collision determination threshold value selection circuits that are provided in correspondence to a plurality of acceleration sensors provided in a front end portion of a vehicle, each of the collision determination threshold value selection circuits selecting a collision determination threshold value of an acceleration sensor corresponding to itself, according to an output change factor of the acceleration sensors identified based on a relationship between an integral value of an output signal of the acceleration sensor corresponding to itself and integral values of output signals of other acceleration sensors.

When the motor vehicle collides with a pedestrian, a local plastic deformation at the collision site is dominant as for signals detected by the acceleration sensors. On the other hand, at positions away from the collision site, a vibration and an elastic deflection are produced due to the collision. Therefore, a difference in output change occurs between the acceleration sensor installed closest to the collision site and the acceleration sensor installed away from the collision site. On the other hand, a vibration while the motor vehicle is traveling on a bad road or during operation of an ABS causes the front end portion of the motor vehicle to vibrate in a similar manner. Therefore, the output changes of the acceleration sensor have the same characteristic. That is, according to the pedestrian collision detection apparatus, it is possible to identify the output change factor of the acceleration sensors based on a relationship between an integral value of an output signal of the acceleration sensor corresponding to one of the collision determination threshold value selection circuits and integral values of output signals of the other acceleration sensors. Therefore, it is possible to select a collision determination threshold value according to this identification result. As a result, it is possible to correctly detect a collision with a pedestrian irrespective of the traveling condition of the motor vehicle. Furthermore, according to the pedestrian protection system, provision of the above pedestrian collision detection apparatus makes it possible to securely protect a pedestrian at the time of collision.

### BRIEF DESCRIPTION OF THE DRAWINGS

FIGS. 1A and 1B are schematic block diagrams of a pedestrian protection system provided with a pedestrian collision detection apparatus according to a first embodiment of the present invention.
FIG 2 is a detailed explanatory diagram showing an ECU 30 in the pedestrian protection system according to the embodiment.
FIG 3 shows one example of threshold value selection map for use in the pedestrian protection system according to the embodiment.
FIG 4 is a first flow chart showing an operation of the pedestrian protection system according to the embodiment.
FIG 5 is a second flow chart showing an operation of the pedestrian protection system according to the embodiment.
FIGS. 6A to 6C are explanatory diagrams showing an operation of a data processing circuit 36 in the pedestrian protection system according to the embodiment.
FIGS. 7A to 7F are explanatory diagrams showing a method of setting collision determination threshold values in the pedestrian protection system according to the embodiment.
FIGS. 8A and 8B are schematic block diagrams of a pedestrian protection system provided with a pedestrian collision detection apparatus according to a second embodiment of the present invention.
FIG. 9 is a detailed explanatory diagram showing an ECU 530 in the pedestrian protection system according to the embodiment.
FIG 10 is a detailed explanatory diagram showing a first collision determination threshold value selection circuit 535L in the pedestrian protection system according to the embodiment.
FIG 11 is a detailed explanatory diagram showing a first safing circuit 537L in the pedestrian protection system according to the embodiment.
FIG 12 is a first flow chart showing an operation of the pedestrian protection system according to the embodiment.
FIG 13 is a second flow chart showing an operation of the pedestrian protection system according to the embodiment.
FIGS. 14A and 14B are first explanatory diagrams related to setting processing of collision determination threshold values in the pedestrian protection system according to the embodiment.
FIGS. 15A and 15B are second explanatory diagrams related to setting processing of collision determination threshold values in the pedestrian protection system according to the embodiment.
FIGS. 16A and 16B are third explanatory diagrams related to setting processing of collision determination threshold values in the pedestrian protection system according to the embodiment.

### DETAILED DESCRIPTION OF THE INVENTION

### [First embodiment]

Hereunder is a description of a first embodiment of the present invention with reference to the drawings.

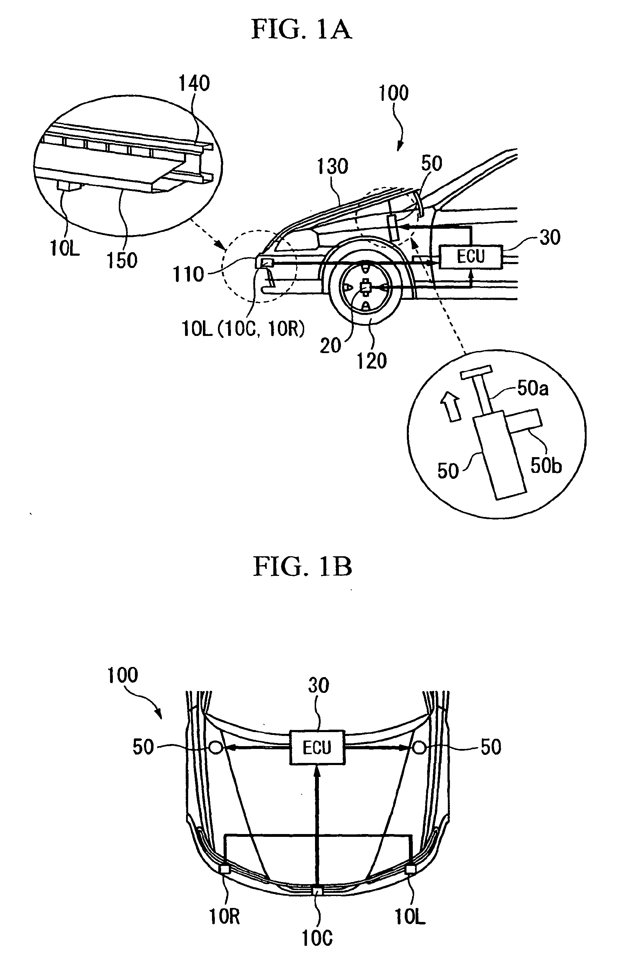

FIGS. 1A and 1B are schematic block diagrams of a pedestrian protection system provided with a pedestrian collision detection apparatus. FIG 1A is a side view of a motor vehicle 100 in which the pedestrian protection system according to the present embodiment is mounted. FIG 1B is a top view of the motor vehicle 100. Furthermore, in the present embodiment, it is assumed that the motor vehicle 100 is a motor vehicle of a front engine type. Over an engine room, there is openably provided an engine hood 130.

As shown in FIGS. 1A and 1B, the pedestrian protection system according to the present invention includes: three acceleration sensors 10L, 10C, 10R that are respectively installed on a left side, in the center, and on a right side along a vehicle width direction of a front end portion (front bumper 110) of the motor vehicle 100; a vehicle velocity sensor 20 that is installed on a front wheel 120 of the motor vehicle 100; an ECU (Electronic Control Unit) 30; and a power unit 50 that is an actuator for lifting a rear end portion of an engine hood 130 of the motor vehicle 100.

In an interior of the front bumper 110, there are provided a bumper beam 140 and a safety plate 150 for protecting the legs of a pedestrian when there is a collision with the pedestrian. The acceleration sensors 10L, 10C, 10R are installed on a lower portion of the safety plate 150. In general, the front bumper 110 is made of a resin. However, for the safety plate 150, an iron plate is used which is molded in a shape (for example, in a square U shape as shown in FIG 1A) such as to be likely to transform at the time of collision to absorb collision energy. That is, when the safety plate 150 is deformed by an impact when the front bumper 110 has collided with a pedestrian, the acceleration sensors 10L, 10C, 10R detect acceleration changes generated at their respective installation positions. Signals corresponding to the acceleration changes are output to the ECU 30.

The vehicle velocity sensor 20 detects a rotational velocity of the front wheel 120 as a vehicle velocity, and outputs a signal corresponding to the vehicle velocity to the ECU 30.

Output signals of the acceleration sensors 10L, 10C, 10R and an output signal of the vehicle velocity sensor 20 are input to the ECU 30. Based on these output signals, the ECU 30 determines whether or not the motor vehicle 100 has collided with a pedestrian. If determining that the motor vehicle 100 has collided, the ECU 30 controls the power unit 50 to thereby lift the engine hood 130. In the present embodiment, the vehicle velocity sensor 20 detects a rotational velocity of the front wheel 120 of the motor vehicle 100 as a vehicle velocity. However, the vehicle velocity sensor 20 may detect a variation in a rear wheel, a transmission, or the like as a vehicle velocity.

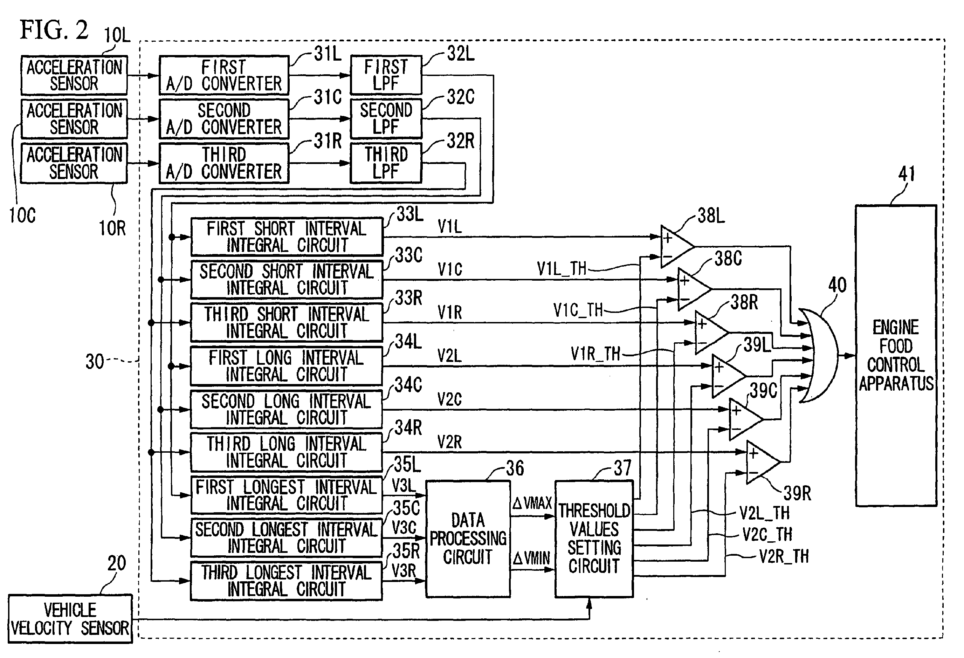

FIG 2 is a block diagram of the ECU 30. As shown in FIG 2, the ECU 30 includes: a first A/D converter 31L; a second A/D converter 31 C; a third A/D converter 31 R; a first LPF (Low Pass Filter) 32L; a second LPF 32C; a third LPF 32R; a first short interval integral circuit 33L; a second short interval integral circuit 33C; a third short interval integral circuit 33R; a first long interval integral circuit 34L; a second long interval integral circuit 34C; a third long interval integral circuit 34R; a first longest interval integral circuit 35L; a second longest interval integral circuit 35C; a third longest interval integral circuit 35R; a data processing circuit 36; a threshold value setting circuit 37; a first short interval comparison circuit 38L; a second short interval comparison circuit 38C; a third short interval comparison circuit 38R; a first long interval comparison circuit 39L; a second long interval comparison circuit 39C; a third long interval comparison circuit 39R; a determination circuit 40; and an engine hood control apparatus 41.

The first A/D converter 31 L receives an output signal of the acceleration sensor 10L as an input, transforms the output signal into a digital signal, and outputs it to the first LPF 32L. The second A/D converter 31C receives an output signal of the acceleration sensor 10C as an input, transforms the output signal into a digital signal, and outputs it to the second LPF 32C. The third A/D converter 31 R receives an output signal of the acceleration sensor 10R as an input, transforms the output signal into a digital signal, and outputs it to the third LPF 32R.

A digital signal that is output from the first A/D converter 31 L is input to the first LPF 32L. The first LPF 32L removes frequency components at a predetermined frequency or higher included in the digital signal, and outputs the digital signal after the removal to the first short interval integral circuit 33L, the first long interval integral circuit 34L, and the first longest interval integral circuit 35L.

A digital signal that is output from the second A/D converter 31C is input to the second LPF 32C. The second LPF 32C removes frequency components at a predetermined frequency or higher included in the digital signal, and outputs the digital signal after the removal to the second short interval integral circuit 33C, the second long interval integral circuit 34C, and the second longest interval integral circuit 35C.

A digital signal that is output from the third A/D converter 31 R is input to the third LPF 32R. The third LPF 32R removes frequency components at a predetermined frequency or higher included in the digital signal, and outputs the digital signal after the removal to the third short interval integral circuit 33R, the third long interval integral circuit 34R, and the third longest interval integral circuit 35R.

As described above, for the safety plate 150 on which the acceleration sensors 10L, 10C, 10R are installed, an iron plate is used which is molded into a shape such as to be likely to transform at the time of collision to absorb collision energy. Therefore, the safety plate 150 is likely to vibrate while the motor vehicle is traveling. As a result, a noise at high frequency resulting from a vibration while the motor vehicle is traveling is likely to be superimposed on the output signals of the acceleration sensors 10L, 10C, 10R. For a correct detection of collision, it is required to separate a signal component resulting from an acceleration change due to a collision with a pedestrian from the aforementioned noise components. That is, cutoff frequencies of the first LPF 32L, the second LPF 32C, and the third LPF 32R are set to values that allow removal of high-frequency noise components resulting from vibration while the motor vehicle is traveling. The noise components are subject to change according to a vehicle structure of the motor vehicle 100. Therefore, it is desirable that cutoff frequencies of the LPFs 32L, 32C, 32R be appropriately set according to the vehicle structure. Furthermore, the cutoff frequencies of all the LPFs 32L, 32C, 32R need not be made equal, but may be set individually.

A digital signal that is output from the first LPF 32L is input to the first short interval integral circuit 33L. The first short interval integral circuit 33L primarily integrates the digital signal (that is, the signal indicative of the acceleration change detected by the acceleration sensor 10L) over a predetermined time interval, and outputs the integral value as a result of the primary integral to a non-inverting input terminal of the first short interval comparison circuit 38L. The integral value calculated by the first short interval integral circuit 33L denotes a velocity change at the installation position of the acceleration sensor 10L. Hereinafter, the integral value that is output by the first short interval integral circuit 33L is referred to as a first short interval velocity change V1L.

A digital signal that is output from the second LPF 32C is input to the second short interval integral circuit 33C. The second short interval integral circuit 33C primarily integrates the digital signal (that is, the signal indicative of the acceleration change detected by the acceleration sensor 10C) over the predetermined time interval, and outputs the integral value as a result of the primary integral to a non-inverting input terminal of the second short interval comparison circuit 38C. The integral value calculated by the second short interval integral circuit 33C denotes a velocity change at the installation position of the acceleration sensor 10C. Hereinafter, the integral value that is output by the second short interval integral circuit 33C is referred to as a second short interval velocity change V1C.

A digital signal that is output from the third LPF 32R is input to the third short interval integral circuit 33R. The third short interval integral circuit 33R primarily integrates the digital signal (that is, the signal indicative of the acceleration change detected by the acceleration sensor 10R) over the predetermined time interval, and outputs the integral value as a result of the primary integral to a non-inverting input terminal of the third short interval comparison circuit 38R. The integral value calculated by the third short interval integral circuit 33R denotes a velocity change at the installation position of the acceleration sensor 10R. Hereinafter, the integral value that is output by the third short interval integral circuit 33R is referred to as a third short interval velocity change V1R.

Note that the time interval of the first short interval integral circuit 33L, the second short interval integral circuit 33C, and the third short interval integral circuit 33R over which the primary integrals are done is set so as to detect a velocity change due to a collision even if the collision is between the motor vehicle 100 and a child, who is light in weight (approximately 25 kg). This is because children, who are light in weight, are hit onto the engine hood 130 in a short period of time after collision. An output change of an acceleration sensor resulting from the collision occurs in a time interval on the order of several ms to about 10 ms. Therefore, it is desirable that the time interval over which a primary integral is done be similarly set to the order of several ms to about 10 ms.

A digital signal that is output from the first LPF 32L is input to the first long interval integral circuit 34L. The first long interval integral circuit 34L primarily integrates the digital signal (that is, the signal indicative of the acceleration change detected by the acceleration sensor 10L) over a time interval longer than that of the short interval integral circuits, and outputs the integral value as a result of the primary integral to a non-inverting input terminal of the first long interval comparison circuit 39L. Hereinafter, the integral value that is output by the first long interval integral circuit 34L is referred to as a first long interval velocity change V2L.

A digital signal that is output from the second LPF 32C is input to the second long interval integral circuit 34C. The second long interval integral circuit 34C primarily integrates the digital signal (that is, the signal indicative of the acceleration change detected by the acceleration sensor 10C) over the time interval longer than that of the short interval integral circuits, and outputs the integral value as a result of the primary integral to a non-inverting input terminal of the second long interval comparison circuit 39C. Hereinafter, the integral value that is output by the second long interval integral circuit 34C referred to as a second long interval velocity change V2C.

A digital signal that is output from the third LPF 32R is input to the third long interval integral circuit 34R. The third long interval integral circuit 34R primarily integrates the digital signal (that is, the signal indicative of the acceleration change detected by the acceleration sensor 10R) over the time interval longer than that of the short interval integral circuits, and outputs the integral value as a result of the primary integral to a non-inverting input terminal of the third long interval comparison circuit 39R. Hereinafter, the integral value that is output by the third long interval integral circuit 34R is referred to as a third long interval velocity change V2R.

Note that the time interval of the first long interval integral circuit 34L, the second long interval integral circuit 34C, and the third long interval integral circuit 34R over which the primary integrals are done is set so as to detect a velocity change due to a collision even if the collision is between the motor vehicle 100 and an adult, who is heavy in weight (approximately 60 kg). This is because adults, who are heavy in weight, are hit onto the engine hood 130 after a lapse of some time after collision. An output change of an acceleration sensor resulting from the collision occurs in a time interval on the order of some ms to about 20 ms. Therefore, it is desirable that the time interval over which a primary integral is done be similarly set to the order of some ms to about 20 ms.

A digital signal that is output from the first LPF 32L is input to the first longest interval integral circuit 35L. The first longest interval integral circuit 35L primarily integrates the digital signal (that is, the signal indicative of the acceleration change detected by the acceleration sensor 10L) over a time interval required to monitor a collision with a pedestrian at least during operation of the ECU 30, and outputs the integral value as a result of the primary integral to a non-inverting input terminal of the data processing circuit 36. Hereinafter, the integral value that is output by the first longest interval integral circuit 35L is referred to as a first longest interval velocity change V3L.

A digital signal that is output from the second LPF 32C is input to the second longest interval integral circuit 35C. The second longest interval integral circuit 35C primarily integrates the digital signal (that is, the signal indicative of the acceleration change detected by the acceleration sensor 10C) over the time interval required to monitor a collision with a pedestrian at least during operation of the ECU 30, and outputs the integral value as a result of the primary integral to a non-inverting input terminal of the data processing circuit 36. Hereinafter, the integral value that is output by the second longest interval integral circuit 35C is referred to as a second longest interval velocity change V3C.

A digital signal that is output from the third LPF 32R is input to the third longest interval integral circuit 35R. The third longest interval integral circuit 35R primarily integrates the digital signal (that is, the signal indicative of the acceleration change detected by the acceleration sensor 10R) over a time interval required to monitor a collision with a pedestrian at least during operation of the ECU 30, and outputs the integral value as a result of the primary integral to a non-inverting input terminal of the data processing circuit 36. Hereinafter, the integral value that is output by the third longest interval integral circuit 35R is referred to as a third longest interval velocity change V3R.

In the first longest interval integral circuit 35L, the second longest interval integral circuit 35C, and the third longest interval integral circuit 35R, the primary integral may be done over a time interval from the time when the ECU 30 is started (powered on) to the time when it is stopped (powered off), or the primary integral may be done over a time interval while the motor vehicle 100 is traveling. In this manner, in the first longest interval integral circuit 35L, the second longest interval integral circuit 35C, and the third longest interval integral circuit 35R, the primary integral is done over a time interval much longer than that of the long interval integral circuits and the short interval integral circuits. As a result, if output signals of the acceleration sensors 10L, 10C, 10R fluctuate between the positive and negative values, there is a case where a current value of the integral value may be in the negative. Negative integral values are considered to have nothing to do with a collision (for example, due to a sudden acceleration or the like). Therefore, in the present embodiment, negative integral values are regarded as "0." In addition, to nullify the influence of a sudden stop such as by braking, a subtraction (addition) with a constant velocity reduction is performed. Furthermore, an additional primary integral is done.

The first longest interval velocity change V3L, the second longest interval velocity change V3C, and the third longest interval velocity change V3R are input to the data processing circuit 36. The data processing circuit 36 holds these values at their respective maximum values V3LMAX, V3CMAX, V3RMAX. Furthermore, the data processing circuit 36 sets a difference between the greatest value VMAX and the smallest value VMIN to a value of a first variable ΔVMAX (= VMAX - VMIN), and sets the smallest value VMIN to a value of a second variable VMIN, the greatest value VMAX being greatest and the smallest value VMIN being least among the maximum values V3LMAX, V3CMAX, V3RMAX. The data processing circuit 36 outputs the first variable ΔVMAX and the second variable VMIN, which are set in the above manner, to the threshold value setting circuit 37.

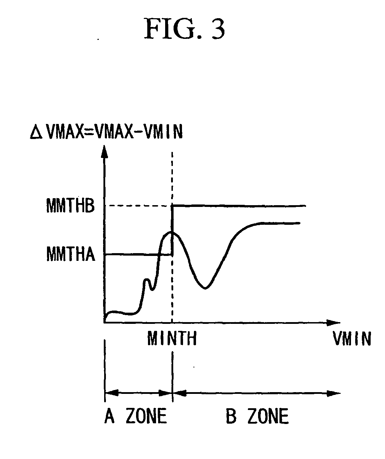

The first variant ΔVMAX and the second variant VMIN, which are set by the data processing circuit 36, and an output signal of the vehicle velocity sensor 20 are input to the threshold value setting circuit 37. On a two-dimensional map made of a first axis related to the first variant ΔVMAX and a second axis related to the second variant VMIN (hereinafter, referred to as a threshold value selection map) as shown in FIG 3, the threshold value setting circuit 37 sets a plurality of weight regions along the second axis according to the vehicle velocity detected by the vehicle velocity sensor 20, the weight regions being classified by the weight of the pedestrian. Furthermore, the threshold value setting circuit 37 sets a pedestrian identification threshold value along the first axis for the plurality of weight regions, the pedestrian identification threshold value being for identifying whether or not an output change factor of the acceleration sensors 10L, 10C, 10R is a collision with a pedestrian.

In the present embodiment, on the threshold value selection map, two regions are set with a value MINTH on the second axis as a border, as shown in FIG 3. The two regions are: a weight region corresponding to the weight of a child (for example, 25 kg, or a collision at a site far from the acceleration sensors) (hereinafter, referred to as an A zone); and a weight region corresponding to a weight of an adult (for example, 60 kg, or a collision at a site near the acceleration sensors) (hereinafter, referred to as a B zone). In the A zone, a pedestrian identification threshold value MMTHA is set on the first axis. In the B zone, a pedestrian identification threshold value MMTHB is set on the first axis.

Furthermore, the threshold value setting circuit 37 sets a collision determination threshold value for each of the acceleration sensors 10L, 10C, 10R according to the first variant ΔVMAX and the second variant VMIN on the above threshold value selection map that are set by the data processing circuit 36. To be more specific, the threshold value setting circuit 37 sets a first short interval collision determination threshold value V1L_TH for comparison with the first short interval velocity change V1L calculated by the first short interval integral circuit 33L, and outputs this setting value to an inverting input terminal of the first short interval comparison circuit 38L. Furthermore, the threshold value setting circuit 37 sets a second short interval collision determination threshold value V1C_TH for comparison with the second short interval velocity change V1C calculated by the second short interval integral circuit 33C, and outputs this setting value to an inverting input terminal of the second short interval comparison circuit 38C. Furthermore, the threshold value setting circuit 37 sets a third short interval collision determination threshold value V1R_TH for comparison with the third short interval velocity change V1R calculated by the third short interval integral circuit 33R, and outputs this setting value to an inverting input terminal of the third short interval comparison circuit 38R.

Furthermore, the threshold value setting circuit 37 sets a first long interval collision determination threshold value V2L_TH for comparison with the first long interval velocity change V2L calculated by the first long interval integral circuit 34L, and outputs this setting value to an inverting input terminal of the first long interval comparison circuit 39L. Furthermore, the threshold value setting circuit 37 sets a second long interval collision determination threshold value V2C_TH for comparison with the second long interval velocity change V2C calculated by the second long interval integral circuit 34C, and outputs this setting value to an inverting input terminal of the second long interval comparison circuit 39C. Furthermore, the threshold value setting circuit 37 sets a third long interval collision determination threshold value V2R_TH for comparison with the third long interval velocity change V2R calculated by the third long interval integral circuit 34R, and outputs this setting value to an inverting input terminal of the third long interval comparison circuit 39R.

The first short interval comparison circuit 38L is, for example, a comparator. It compares the first short interval velocity change V1L that is input to the non-inverting input terminal with the first short interval collision determination threshold value V1L_TH that is input to the inverting input terminal and outputs a signal according to the comparison result to the determination circuit 40. In the present embodiment, if the first short interval velocity change V1L exceeds the first short interval collision determination threshold value V1L_TH, then a high-level signal is output.

The second short interval comparison circuit 38C is, for example, a comparator. It compares the second short interval velocity change V1C that is input to the non-inverting input terminal with the second short interval collision determination threshold value V1C_TH that is input to the inverting input terminal and outputs a signal according to the comparison result to the determination circuit 40. In the present embodiment, if the second short interval velocity change V1C exceeds the second short interval collision determination threshold value V1C_TH, then a high-level signal is output.

The third short interval comparison circuit 38R is, for example, a comparator. It compares the third short interval velocity change V1R that is input to the non-inverting input terminal with the third short interval collision determination threshold value V1R_TH that is input to the inverting input terminal, and outputs a signal according to the comparison result to the determination circuit 40. In the present embodiment, if the third short interval velocity change V1R exceeds the third short interval collision determination threshold value V1R_TH, then a high-level signal is output.

The first long interval comparison circuit 39L is, for example, a comparator. It compares the first long interval velocity change V2L that is input to the non-inverting input terminal with the first long interval collision determination threshold value V2L_TH that is input to the inverting input terminal, and outputs a signal according to the comparison result to the determination circuit 40. In the present embodiment, if the first long interval velocity change V2L exceeds the first long interval collision determination threshold value V2L_TH, then a high-level signal is output.

The second long interval comparison circuit 39C is, for example, a comparator. It compares the second long interval velocity change V2C that is input to the non-inverting input terminal with the second long interval collision determination threshold value V2C_TH that is input to the inverting input terminal, and outputs a signal according to the comparison result to the determination circuit 40. In the present embodiment, if the second long interval velocity change V2C exceeds the second long interval collision determination threshold value V2C_TH, then a high-level signal is output.

The third long interval comparison circuit 39R is, for example, a comparator. It compares the third long interval velocity change V2R that is input to the non-inverting input terminal with the third long interval collision determination threshold value V2R_TH that is input to the inverting input terminal and outputs a signal according to the comparison result to the determination circuit 40. In the present embodiment, if the third long interval velocity change V2R exceeds the third long interval collision determination threshold value V2R_TH, then a high-level signal is output.

The determination circuit 40 is, for example, an OR circuit. If at least one of the output signals of the first short interval comparison circuit 38L, the second short interval comparison circuit 38C, the third short interval comparison circuit 38R, the first long interval comparison circuit 39L, the second long interval comparison circuit 39C, and the third long interval comparison circuit 39R is a high-level signal, then the determination circuit 40 determines that there has been a collision with a pedestrian, and outputs the high-level signal that indicates the identification result to the engine hood control apparatus 41.

In this manner, in the present embodiment, the pedestrian collision detection apparatus includes: the acceleration sensors 10L, 10C, 10R; the first A/D converter 31 L; the second A/D converter 31C; the third A/D converter 31 R; the first LPF 32L; the second LPF 32C; the third LPF 32R; the first short interval integral circuit 33L; the second short interval integral circuit 33C; the third short interval integral circuit 33R; the first long interval integral circuit 34L; the second long interval integral circuit 34C; the third long interval integral circuit 34R; the first longest interval integral circuit 35L; the second longest interval integral circuit 35C; the third longest interval integral circuit 35R; the data processing circuit 36; the threshold value setting circuit 37; the first short interval comparison circuit 38L; the second short interval comparison circuit 38C; the third short interval comparison circuit 38R; the first long interval comparison circuit 39L; the second long interval comparison circuit 39C; the third long interval comparison circuit 39R; and the determination circuit 40.

If a high-level signal is input from the determination circuit 40, that is, if it is determined that there has been a collision with a pedestrian, then the engine hood control apparatus 41 controls the power unit 50, to thereby lift the engine hood 130.

The ECU 30 has been described in detail above. Hereunder is a continued description, with reference to FIGS. 1A and 1B. The power unit 50 is made of, for example, an air cylinder. It lifts the engine hood 130 with a shaft 50a lifted by the control of the ECU 30 (engine hood control apparatus 41).

Furthermore, in the power unit 50, there is provided a shaft lock mechanism 50b. The power unit 50 further includes a mechanism for maintaining a lifted position of the engine hood 130 by locking the shaft 50a by means of the shaft lock mechanism 50b after the engine hood 130 is lifted. Note that as the power unit 50 for lifting the engine hood 130, another actuator may be used such as an airbag that inflates at the time of determination of a collision.

Next is a description of an operation of the pedestrian protection system according to the present embodiment, which is constructed as above.

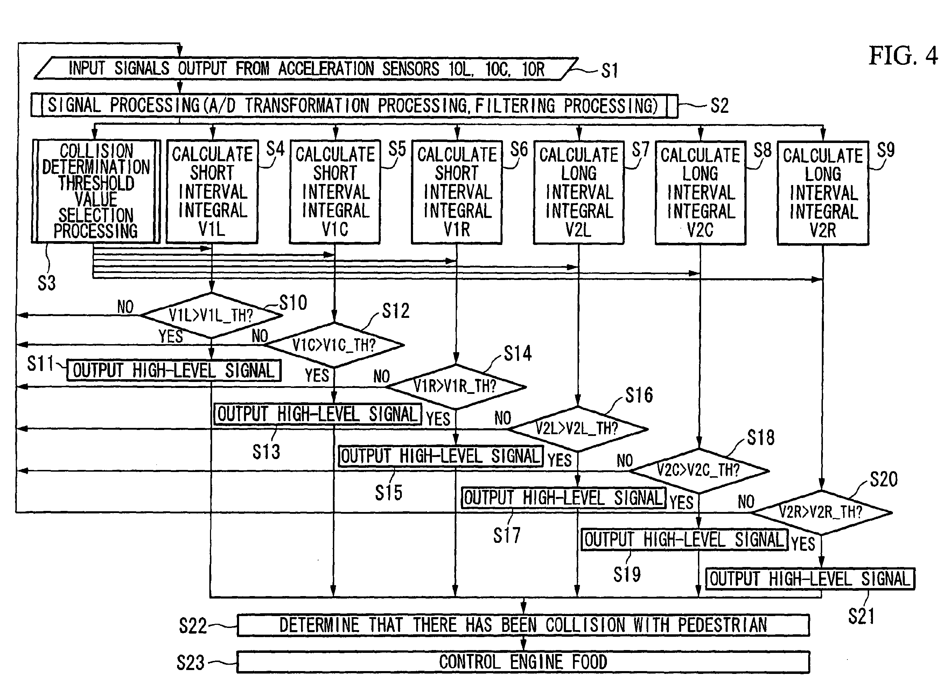

FIG 4 is a flow chart showing an operation of the pedestrian protection system according to the present embodiment. As shown in FIG 4, output signals are input to the ECU 30 from the acceleration sensors 10L, 10C, 10R, the output signals being in accordance with acceleration changes at the installation positions of the acceleration sensors 10L, 10C, 10R (step S1). The output signals of the acceleration sensors 10L, 10C, 10R that have been input to the ECU 30 are respectively subjected to digital transformation processing by the first A/D converter 31L, the second A/D converter 31C, and the third A/D converter 31R and are also respectively subjected to filtering processing (removal of high-frequency noise components resulting from a vibration while the motor vehicle is traveling) by the first LPF 32L, the second LPF 32C, and the third LPF 32R (step S2).

The output signal of the acceleration sensor 10L, which has been subjected to the digital transformation processing and the filtering processing, is input to the first short interval integral circuit 33L, the first long interval integral circuit 34L, and the first longest interval integral circuit 35L. The output signal of the acceleration sensor 10C is input to the second short interval integral circuit 33C, the second long interval integral circuit 34C, and the second longest interval integral circuit 35C. The output signal of the acceleration sensor 10R is input to the third short interval integral circuit 33R, the third long interval integral circuit 34R, and the third longest interval integral circuit 35R.

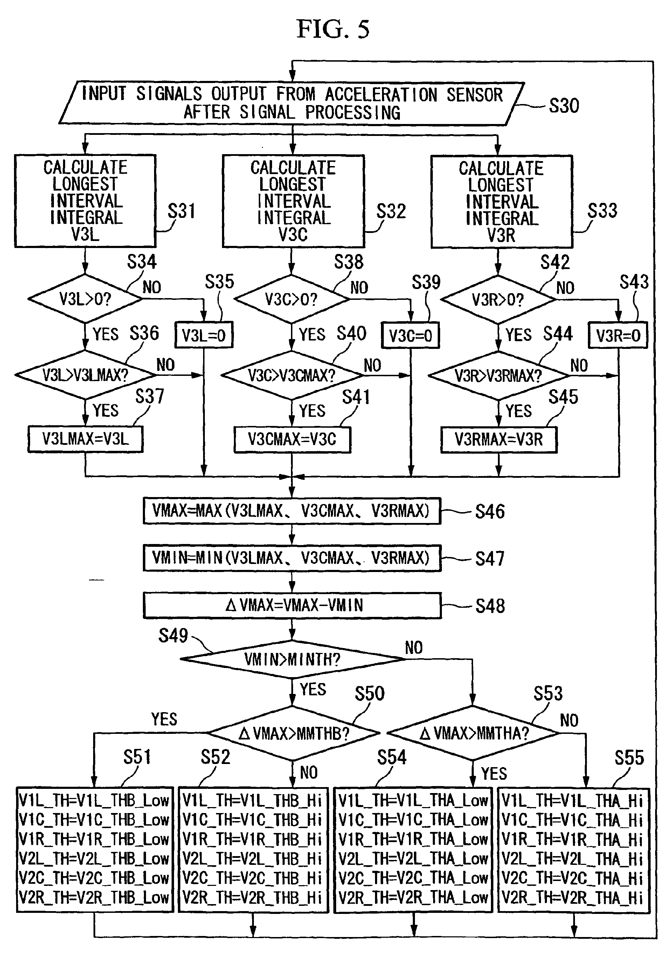

Subsequently, collision determination threshold values are set based on the integral values (the first longest interval velocity change V3L, the second longest interval velocity change V3C, and the third longest interval velocity change V3R) respectively calculated by the first longest interval integral circuit 35L, the second longest interval integral circuit 35C, and the third longest interval integral circuit 35R (step S3). Hereunder is a detailed description of setting processing of the collision determination threshold values in step S3, with reference to the flow chart of FIG 5.

As shown in FIG. 5, when the output signals of the acceleration sensors 10L, 10C, 10R that have been subjected to the digital transformation processing and the filtering processing are respectively input to the first longest interval integral circuit 35L, the second longest interval integral circuit 35C, and the third longest interval integral circuit 35R (step S30), the first longest interval integral circuit 35L calculates the first longest interval velocity change V3L, and outputs it to the data processing circuit 36, the first longest interval velocity change V3L being a primary integral value of the output signal of the acceleration sensor 10L (step S31). Similarly, the second longest interval integral circuit 35C calculates the second longest interval velocity change V3C, and outputs it to the data processing circuit 36, the second longest interval velocity change V3C being a primary integral value of the output signal of the acceleration sensor 10C (step S32). The third longest interval integral circuit 35R calculates the third longest interval velocity change V3R and outputs it to the data processing circuit 36. The third longest interval velocity change V3R is a primary integral value of the output signal of the acceleration sensor 10R (step S33).

The data processing circuit 36 determines whether or not the first longest interval velocity change V3L is greater than "0" (step S34). If the determination is "No," that is, if V3L ≤ 0, then the data processing circuit 36 sets V3L = 0, and the process proceeds to step S46 (step S35). On the other hand, if the determination is "Yes," that is, if V3L > 0 in the above S34, then the data processing circuit 36 determines whether or not V3L is greater than the maximum value V3LMAX (step S36). If the determination is "Yes," that is, if V3L > V3LMAX, then the data processing circuit 36 updates the V3L obtained this time as a new maximum value V3LMAX, and the process proceeds to step S46 (step S37). If the determination is "No," that is, if V3L ≤ V3LMAX in the above step S36, the data processing circuit 36 does not update the maximum value V3LMAX, and the process proceeds to step S46.

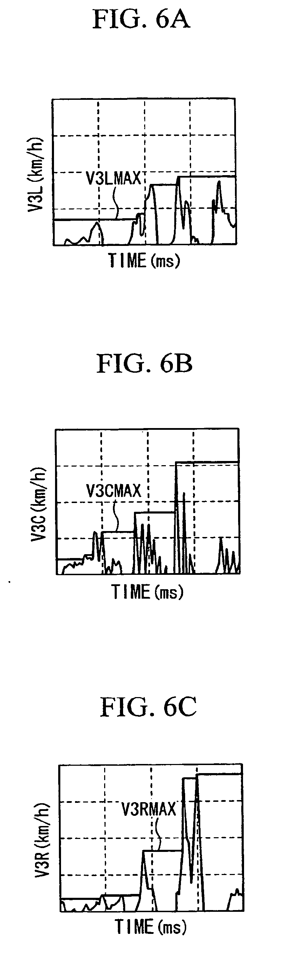

Through such processes in steps S34 to S37 in the data processing circuit 36, the first longest interval velocity change V3L is maintained as the maximum value V3LMAX, as shown in FIG. 6A.

Similarly, the data processing circuit 36 determines whether or not the second longest interval velocity change V3C is greater than "0" (step S38). If the determination is "No," that is, if V3C ≤0, then the data processing circuit 36 sets V3C = 0, and the process proceeds to step S46 (step S39). On the other hand, if the determination is "Yes," that is, if V3C > 0 in the above S34, then the data processing circuit 36 determines whether or not V3C is greater than the maximum value V3CMAX (step S40). If the determination is "Yes," that is, if V3C > V3CMAX, then the data processing circuit 36 updates the V3C obtained this time as a new maximum value V3CMAX, and the process proceeds to step S46 (step S41). If the determination is "No," that is, if V3C ≤ V3CMAX in the above step 40, the data processing circuit 36 does not update the maximum value V3CMAX, and the process proceeds to step S46.

Through such processes in steps S38 to S41 in the data processing circuit 36, the second longest interval velocity change V3C is maintained as the maximum value V3CMAX, as shown in FIG. 6B.

Similarly, the data processing circuit 36 determines whether or not the third longest interval velocity change V3R is greater than "0" (step S42). If the determination is "No," that is, if V3R ≤ 0, then the data processing circuit 36 sets V3R = 0, and the process proceeds to step S46 (step S43). On the other hand, if the determination is "Yes," that is, if V3R > 0 in the above step S42, then the data processing circuit 36 determines whether or not V3R is greater than the maximum value V3RMAX (step S44). If the determination is "Yes," that is, if V3R > V3RMAX, then the data processing circuit 36 updates the V3R obtained this time as a new maximum value V3RMAX, and the process proceeds to step S46 (step S45). If the determination is "No," that is, if V3R ≤ V3RMAX in the above step S44, the data processing circuit 36 does not update the maximum value V3RMAX, and the process proceeds to step S46.

Through such processes in steps S42 to S45 in the data processing circuit 36, the third longest interval velocity change V3R is maintained as the maximum value V3RMAX, as shown in FIG. 6C.

Note that the processes in the steps S34 to S37, the processes in steps S38 to S41, and the processes in steps S42 to S45 as described above are performed in a parallel manner.

The data processing circuit 36 then sets the greatest value among the maximum values V3LMAX, V3CMAX, V3RMAX as VMAX (step S46), and also sets the smallest value among the maximum values V3LMAX, V3CMAX, V3RMAX as VMIN (second variant) (step S47). The data processing circuit 36 then sets the difference between the greatest value VMAX and the smallest value VMIN as the value of first variant ΔVMAX ( = VMAX - VMIN), and outputs the first variant ΔVMAX and the second variant VMIN to the threshold value setting circuit 37 (step S48).

Here, as described above, the threshold value setting circuit 37 sets a threshold value selection map as shown in FIG 3 according to the vehicle velocity detected by the vehicle velocity sensor 20. According to the values of the first variant ΔVMAX and the second variant VMIN on this threshold value selection map, the threshold value setting circuit 37 sets collision determination threshold values for each of the acceleration sensors 10L, 10C, 10R.

Prior to the description of step S49 and beyond, a setting method of collision determination threshold values by use of a threshold value selection map will be described below.

As shown in FIG. 3, on the threshold value selection map, the A zone corresponding to the weight of a child and the B zone corresponding to the weight of an adult are set, with the value MINTH on the second axis as a boundary. As for children, who are light in weight, a change in acceleration at the time of collision is small compared with the case of adults. Therefore, the value of the second variant VMIN is included in the A zone. On the other hand, as for adults, who are heavy in weight, a change in acceleration at the time of collision is large. Therefore, the value of the second variant VMIN is included in the B zone. That is, it is possible to identify whether the weight of the pedestrian is light or heavy (whether a child or an adult) based on the value of the second variant VMIN.

Furthermore, in the case where the motor vehicle 100 collides with a pedestrian, a local plastic deformation at the collision site is dominant. At positions away from the collision site, a vibration and an elastic deflection are produced due to the collision. Therefore, a difference in output change (acceleration change) occurs between the acceleration sensor installed closest to the collision site and the acceleration sensor installed away from the collision site. To be more specific, the acceleration sensor installed closest to the collision site has a large output change, and the acceleration sensor installed away from the collision site has a small output change. That is, if an output change factor of the acceleration sensors is a collision with a pedestrian, then the value of the first variant ΔVMAX is large.

On the other hand, a vibration while the motor vehicle is traveling on a bad road or during operation of an ABS is produced in the front end portion of the motor vehicle in a uniform manner irrespective of positions in the front end portion. Therefore, the output changes of the three acceleration sensors 10L, 10C, 10R have similar characteristics. That is, if the output change factor of the acceleration sensors is a vibration while the motor vehicle is traveling on a bad road or during operation of an ABS, then the value of the first variant ΔVMLAX is small. Therefore, it is possible to identify whether the output change factor of the acceleration sensor is a collision with a pedestrian, or a vibration while the motor vehicle is traveling on a bad road or during operation of an ABS, based on the value of the first variant ΔVMAX. The pedestrian identification threshold values MMTHA, MMTHB respectively set in the A zone and the B zone are set to values that allow an identification of the cause of the output changes of the acceleration sensors both when the pedestrian is a child and when the pedestrian is an adult.

As for children, who are light in weight, a change in acceleration at the time of collision is small compared with the case of adults. Therefore, the pedestrian identification threshold value MMTHA in the A zone is set lower than the pedestrian identification threshold value MMTHB in the B zone, as shown in FIG 3. Furthermore, the A zone, the B zone, and the pedestrian identification threshold values MMTHA, MMTHB that are set in such a threshold value selection map have different optimal values depending on the vehicle velocity. Therefore, it is desirable that the A zone, the B zone, and the pedestrian identification threshold values MMTHA, MMTHB be appropriately modified according to the vehicle velocity detected by the vehicle velocity sensor 20. To be more specific, the higher the vehicle velocity is, the larger the acceleration change is at the time of collision. Therefore, the border value MINTH between the A zone and the B zone, and the pedestrian identification threshold values MMTHA, MMTHB are set to high values.

In this manner, based on the threshold value selection map that shows a relationship among primary integral values (velocity changes) of output signals of the acceleration sensors 10L, 10C, 10R, it is possible to identify whether the weight of a pedestrian is light or heavy (whether a child or an adult) and to identify the output change factor of the acceleration sensors (whether the collision is due to a collision with a pedestrian or due to a vibration when the vehicle is traveling on a bad road or during operation of an ABS). Furthermore, it is possible to set the collision determination threshold values according to these identification results. As a result, it is possible to accurately detect a collision between the motor vehicle 100 and a pedestrian irrespective of the weight of the pedestrian and a traveling condition of the motor vehicle 100.

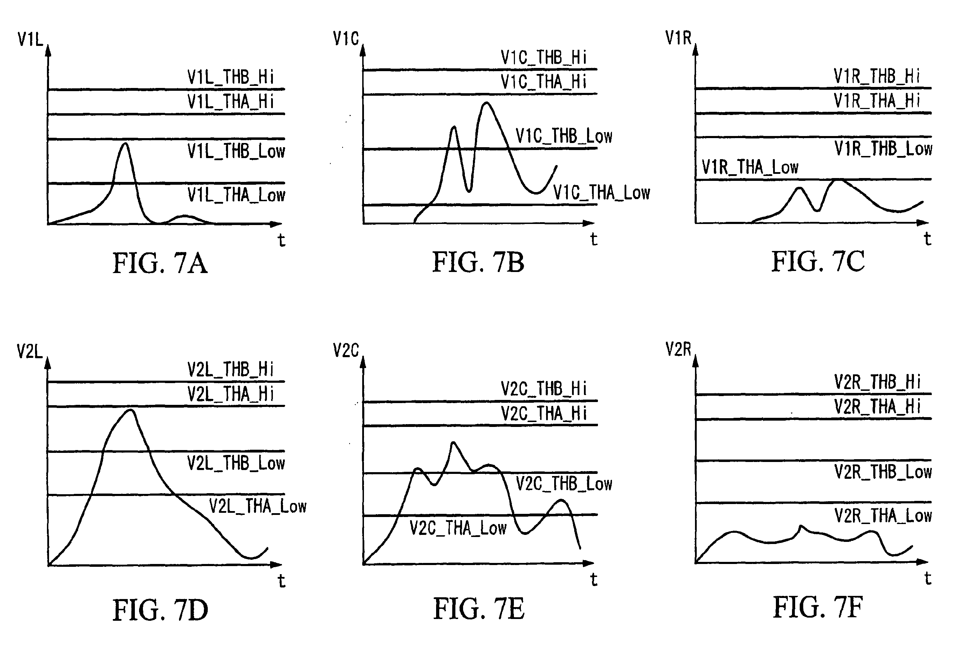

FIG 7A shows threshold values that are selected as a first short interval collision determination threshold values V1L_TH for comparison with the first short interval velocity change V1L calculated by the first short interval integral circuit 33L. In FIG. 7A, V1L_THB_Low is a threshold value that is selected as a first short interval collision determination threshold value V1L_TH if the second variant VMIN > MINTH and if the first variant ΔVMAX > MMTHB on the threshold value selection map, that is, if the pedestrian is identified as an adult, and if the output change factor of the acceleration sensors is identified as a collision with a pedestrian. V1L_THA_Low is a threshold value that is selected as a first short interval collision determination threshold value V1L_TH if the second variant VMIN ≤ MINTH and if the first variant ΔVMAX > MMTHA on the threshold value selection map, that is, if the pedestrian is identified as a child and if the output change factor of the acceleration sensors is identified as a collision with a pedestrian. In this manner, if the output change factor of the acceleration sensors is identified as a collision with a pedestrian, the relevant threshold values are set to comparatively low values so as to securely detect a collision with a pedestrian. Furthermore, V1L_THA_Low is set to a value lower than V1L_THB_Low because the acceleration change at the time of collision is smaller for children.

Furthermore, in FIG 7A, V1L_THB_Hi is a threshold value that is selected as a first short interval collision determination threshold value V1L_TH if the second variant VMIN > MINTH and if the first variant ΔVMAX ≤ MMTHB on the threshold value selection map, that is, if the pedestrian is identified as an adult, and if the output change factor of the acceleration sensors is identified as a vibration while the motor vehicle is traveling on a bad road or during operation of an ABS. V1L_THA Hi is a threshold value that is selected as a first short interval collision determination threshold value V1L_TH if the second variant VMIN ≤ MINTH and if the first variant ΔVMAX ≤ MMTHA on the threshold value selection map, that is, if the pedestrian is identified as a child and if the output change factor of the acceleration sensors is identified as a vibration while the motor vehicle is traveling on a bad road or during operation of an ABS. In this manner, if the output changes of the acceleration sensors are identified as a vibration while the motor vehicle is traveling on a bad road or during operation of an ABS, the relevant threshold values are set to comparatively high values so as to avoid an erroneous detection of a collision with a pedestrian. Furthermore, V1L_THA_Hi is set to a value lower than V1L_THB_Hi because the acceleration change at the time of collision is smaller for children.

FIG 7B shows threshold values that are selected as second short interval collision determination threshold values V1C_TH for comparison with the second short interval velocity change V1C calculated by the second short interval integral circuit 33C. In FIG 7B, V1C_THB_Low is a threshold value that is selected as a second short interval collision determination threshold value V1C_TH if the second variant VMIN > MINTH and if the first variant ΔVMAX > MMTHB on the threshold value selection map. V1C_THA_Low is a threshold value that is selected as a second short interval collision determination threshold value V1C_TH if the second variant VMIN ≤ MINTH and if the first variant ΔVMAX > MMTHA on the threshold value selection map. V1C_THB_Hi is a threshold value that is selected as a second short interval collision determination threshold value V1C_TH if the second variant VMIN > MINTH and if the first variant ΔVMAX ≤ MMTHB on the threshold value selection map. V1C_THA_Hi is a threshold value that is selected as a second short interval collision determination threshold value V1C_TH if the second variant VMIN ≤ MINTH and if the first variant ΔVMAX ≤ MMTHA on the threshold value selection map.

FIG 7C shows threshold values that are selected as third short interval collision determination threshold values V1R_TH for comparison with the third short interval velocity change V1R calculated by the third short interval integral circuit 33R. In FIG 7C, V1R_THB_Low is a threshold value that is selected as a third short interval collision determination threshold value V1R_TH if the second variant VMIN > MINTH and if the first variant ΔVMAX > MMTHB on the threshold value selection map. V1R_THA_Low is a threshold value that is selected as a third short interval collision determination threshold value V1R_TH if the second variant VMIN ≤ MINTH and if the first variant ΔVMAX > MMTHA on the threshold value selection map. V 1 R_THB_Hi is a threshold value that is selected as a third short interval collision determination threshold value V1R_TH if the second variant VMIN > MINTH and if the first variant ΔVMAX ≤ MMTHB on the threshold value selection map. V1R_THA_Hi is a threshold value that is selected as a third short interval collision determination threshold value V1R_TH if the second variant VMIN ≤ MINTH and if the first variant ΔVMAX ≤ MMTHA on the threshold value selection map.

FIG 7D shows threshold values that are selected as first long interval collision determination threshold values V2L_TH for comparison with the first long interval velocity change V2L calculated by the first long interval integral circuit 34L. In FIG. 7D, V2L_THB_Low is a threshold value that is selected as a first long interval collision determination threshold value V2L_TH if the second variant VMIN > MINTH and if the first variant ΔVMAX > MMTHB on the threshold value selection map. V2L_THA_Low is a threshold value that is selected as a first long interval collision determination threshold value V2L_TH if the second variant VMIN ≤ MINTH and if the first variant ΔVMAX > MMTHA on the threshold value selection map. V2L_THB_Hi is a threshold value that is selected as a first long interval collision determination threshold value V2L_TH if the second variant VMIN > MINTH and if the first variant ΔVMAX MMTHB on the threshold value selection map. V2L_THA_Hi is a threshold value that is selected as a first long interval collision determination threshold value V2L_TH if the second variant VMIN ≤ MINTH and if the first variant ΔVMAX ≤ MMTHA on the threshold value selection map.

FIG 7E shows threshold values that are selected as second long interval collision determination threshold values V2C_TH for comparison with the second long interval velocity change V2C calculated by the second long interval integral circuit 34C. In FIG 7E, V2C_THB_Low is a threshold value that is selected as a second long interval collision determination threshold value V2C_TH if the second variant VMIN > MINTH and if the first variant ΔVMAX > MMTHB on the threshold value selection map. V2C_THA_Low is a threshold value that is selected as a second long interval collision determination threshold value V2C_TH if the second variant VMIN ≤ MINTH and if the first variant ΔVMAX > MMTHA on the threshold value selection map. V2C_THB_Hi is a threshold value that is selected as a second long interval collision determination threshold value V2C_TH if the second variant VMIN > MINTH and if the first variant AVMAX ≤ MMTHB on the threshold value selection map. V2C_THA_Hi is a threshold value that is selected as a second long interval collision determination threshold value V2C_TH if the second variant VMIN ≤ MINTH and if the first variant ΔVMAX ≤ MMTHA on the threshold value selection map.

FIG 7F shows threshold values that are selected as third long interval collision determination threshold values V2R_TH for comparison with the third long interval velocity change V2R calculated by the third long interval integral circuit 34R. In FIG. 7F, V2R_THB_Low is a threshold value that is selected as a third long interval collision determination threshold value V2R_TH if the second variant VMIN > MINTH and if the first variant ΔVMAX > MMTHB on the threshold value selection map. V2R_THA_Low is a threshold value that is selected as a third long interval collision determination threshold value V2R_TH if the second variant VMIN ≤ MINTH and if the first variant ΔVMAX > MMTHA on the threshold value selection map. V2R_THB_Hi is a threshold value that is selected as a third long interval collision determination threshold value V2R_TH if the second variant VMIN > MINTH and if the first variant ΔVMAX < MMTHB on the threshold value selection map. V2R_THA_Hi is a threshold value that is selected as a third long interval collision determination threshold value V2R_TH if the second variant VMIN ≤ MINTH and if the first variant ΔVMAX ≤ MMTHA on the threshold value selection map.

These threshold values may be set different or equal for the acceleration sensors 10L, 10C, 10R. For example, the acceleration sensor 10C installed in the middle in the vehicle width direction can be considered to be most sensitive to an impact. Therefore, the threshold value for the acceleration sensor 10C may be set higher than the threshold values for the other acceleration sensors 10L, 10R. Furthermore, the sensitivity of the acceleration sensors 10L, 10R installed on the left and right sides can be considered to be about equal. Therefore, the threshold values for the acceleration sensors 10L, 10R may be set equal.

Note that these threshold values are previously stored in an internal memory of the threshold value setting circuit 37. In the processes in step S49 and beyond that will be described below, threshold values stored in the above internal memory are appropriately read according to the values of the first variant ΔVMAX and the second variant VMIN on the threshold value selection map. Furthermore, optimum values for these threshold values change according to the vehicle velocity. Therefore, it is desirable that threshold values according to a plurality of vehicle velocities be previously stored in the internal memory.

With the above-mentioned setting method of the collision determination threshold values as a precondition, the processing in step S49 and beyond will be described below.

The threshold value setting circuit 37 determines whether the value of the second variant VMIN that is input from the data processing circuit 36 is greater than the border value MINTH set on the second axis of the threshold value selection map, that is, whether the value of the second variant VMIN is included in the A zone or in the B zone (step S49). That is, in step S49, it is identified whether the weight of the pedestrian is light or heavy (whether a child or adult) based on the value of the second variant VMIN.

In the above step S49, if the determination is "Yes," that is, if VMIN > MINTH (B zone: adult), then the threshold value setting circuit 37 determines whether the value of the first variant ΔVMAX is greater than the pedestrian identification threshold value MMTHB in the B zone (step S50). That is, in this step S50, it is identified whether the output change factor of the acceleration sensors is a collision with a pedestrian, or a vibration while the motor vehicle is traveling on a bad road or during operation of an ABS.

In this step S50, if the determination is "Yes," that is, if ΔVMAX > MMTHB (if the pedestrian is identified as an adult, and if the output change factor of the acceleration sensors is identified as a collision with a pedestrian), the threshold value setting circuit 37 selects V1L_THB_Low shown in FIG 7A, sets it as a first short interval collision determination threshold value V1L_TH, and outputs the setting value to the inverting input terminal of the first short interval comparison circuit 38L (step S51). Furthermore, in this step S51, the threshold value setting circuit 37 selects V1C_THB_Low shown in FIG 7B, sets it as a second short interval collision determination threshold value V1C_TH, and outputs the setting value to the inverting input terminal of the second short interval comparison circuit 38C. Furthermore, in step S51, the threshold value setting circuit 37 selects V1R_THB_Low shown in FIG 7C, sets it as a third short interval collision determination threshold value V1R_TH, and outputs the setting value to the inverting input terminal of the third short interval comparison circuit 38R.

Furthermore, in this step S51, the threshold value setting circuit 37 selects V2L_THB_Low shown in FIG 7D, sets it as a first long interval collision determination threshold value V2L_TH, and outputs the setting value to the inverting input terminal of the first long interval comparison circuit 39L. Furthermore, in step S51, the threshold value setting circuit 37 selects V2C_THB_Low shown in FIG 7E, sets it as a second long interval collision determination threshold value V2C_TH, and outputs the setting value to the inverting input terminal of the second long interval comparison circuit 39C. In addition, in step S51, the threshold value setting circuit 37 selects V2R_THB_Low shown in FIG 7F, sets it as a third long interval collision determination threshold value V2R_TH, and outputs the setting value to the inverting input terminal of the third long interval comparison circuit 39R.

On the other hand, in the above step S50, if the determination is "No," that is, if ΔVMAX ≤ MMTHB (if the pedestrian is identified as an adult, and if the output change factor of the acceleration sensors is identified as a vibration while the motor vehicle is traveling on a bad road or during operation of an ABS), the threshold value setting circuit 37 selects V1L_THB_Hi shown in FIG. 7A, sets it as a first short interval collision determination threshold value V1L_TH, and outputs the setting value to the inverting input terminal of the first short interval comparison circuit 38L (step S52). Furthermore, in this step S52, the threshold value setting circuit 37 selects V1C_THB_Hi shown in FIG. 7B, sets it as a second short interval collision determination threshold value V1C_TH, and outputs the setting value to the inverting input terminal of the second short interval comparison circuit 38C. Furthermore, in this S52, the threshold value setting circuit 37 selects V1R_THB_Hi shown in FIG. 7C, sets it as a third short interval collision determination threshold value V1R_TH, and outputs the setting value to the inverting input terminal of the third short interval comparison circuit 38R.

Furthermore, in this step S52, the threshold value setting circuit 37 selects V2L_THB_Hi shown in FIG 7D, sets it as a first long interval collision determination threshold value V2L_TH, and outputs the setting value to the inverting input terminal of the first long interval comparison circuit 39L. Similarly, in this step S52, the threshold value setting circuit 37 selects V2C_THB_Hi shown in FIG 7E, sets it as a second long interval collision determination threshold value V2C_TH, and outputs the setting value to the inverting input terminal of the second long interval comparison circuit 39C. In addition, in this step S52, the threshold value setting circuit 37 selects V2R_THB_Hi shown in FIG 7F, sets it as a third long interval collision determination threshold value V2R_TH, and outputs the setting value to the inverting input terminal of the third long interval comparison circuit 39R.

On the other hand, in the above step S49, if the determination is "No," that is, if VMIN ≤ MINTH (A zone: a child), then the threshold value setting circuit 37 determines whether the value of the first variant ΔVMAX is greater than the pedestrian identification threshold value MMTHA in the A zone (step S53). In this step S53, if the determination is "Yes," that is, if ΔVMAX > MMTHA (if the pedestrian is identified as a child, and if the output change factor of the acceleration sensors is identified as a collision with a pedestrian), the threshold value setting circuit 37 selects V1L_THA Low shown in FIG 7A, sets it as a first short interval collision determination threshold value V1L_TH, and outputs the setting value to the inverting input terminal of the first short interval comparison circuit 38L (step S54).

Furthermore, in this step S54, the threshold value setting circuit 37 selects V1C_THA_Low shown in FIG 7B, sets it as a second short interval collision determination threshold value V1C_TH, and outputs the setting value to the inverting input terminal of the second short interval comparison circuit 38C. Furthermore, in this step S54, the threshold value setting circuit 37 selects V1R_THA_Low shown in FIG 7C, sets it as a third short interval collision determination threshold value V1R_TH, and outputs the setting value to the inverting input terminal of the third short interval comparison circuit 38R.

Furthermore, in this step S54, the threshold value setting circuit 37 selects V2L_THA_Low shown in FIG 7D, sets it as a first long interval collision determination threshold value V2L_TH, and outputs the setting value to the inverting input terminal of the first long interval comparison circuit 39L. Similarly, in this step S54, the threshold value setting circuit 37 selects V2C_THA_Low shown in FIG 7E, sets it as a second long interval collision determination threshold value V2C_TH, and outputs the setting value to the inverting input terminal of the second long interval comparison circuit 39C. In addition, in this step S54, the threshold value setting circuit 37 selects V2R_THA_Low shown in FIG 7F, sets it as a third long interval collision determination threshold value V2R_TH, and outputs the setting value to the inverting input terminal of the third long interval comparison circuit 39R.

On the other hand, in the above step S53, if the determination is "No," that is, if ΔVMAX ≤ MMTHA (if the pedestrian is identified as a child, and if the output change factor of the acceleration sensors is identified as a vibration while the motor vehicle is traveling on a bad road or during operation of an ABS), the threshold value setting circuit 37 selects V1L_THA_Hi shown in FIG 7A, sets it as a first short interval collision determination threshold value V1L_TH, and outputs the setting value to the inverting input terminal of the first short interval comparison circuit 38L (step S55). Furthermore, in this step S55, the threshold value setting circuit 37 selects V1C_THA_Hi shown in FIG 7B, sets it as a second short interval collision determination threshold value V1C_TH, and outputs the setting value to the inverting input terminal of the second short interval comparison circuit 38C. Furthermore, in this step S55, the threshold value setting circuit 37 selects V1R_THA_Hi shown in FIG 7C, sets it as a third short interval collision determination threshold value V1R_TH, and outputs the setting value to the inverting input terminal of the third short interval comparison circuit 38R.

Furthermore, in this step S55, the threshold value setting circuit 37 selects V2L_THA_Hi shown in FIG 7D, sets it as a first long interval collision determination threshold value V2L_TH, and outputs the setting value to the inverting input terminal of the first long interval comparison circuit 39L. Similarly, in this step S55, the threshold value setting circuit 37 selects V2C_THA_Hi shown in FIG 7E, sets it as a second long interval collision determination threshold value V2C_TH, and outputs the setting value to the inverting input terminal of the second long interval comparison circuit 39C. In addition, in this step S55, the threshold value setting circuit 37 selects V2R_THA_Hi shown in FIG 7F, sets it as a third long interval collision determination threshold value V2R_TH, and outputs the setting value to the inverting input terminal of the third long interval comparison circuit 39R.

The setting processing of the collision determination threshold values in step S3 of FIG 4 has been described above. Hereunder is a description of processes of step S4 and beyond of FIG 4.

The first short interval integral circuit 33L primarily integrates the output signal of the acceleration sensor 1 0L that has been subjected to the digital transformation processing and the filtering processing over a predetermined time interval, and outputs this integral value to the non-inverting input terminal of the first short interval comparison circuit 38L, with the integral value as the first short interval velocity change V1L_(step S4). The second short interval integral circuit 33C primarily integrates the output signal of the acceleration sensor 10C that has been subjected to the digital transformation processing and the filtering processing over the predetermined time interval, and outputs this integral value to the non-inverting input terminal of the second short interval comparison circuit 38C, with the integral value as the second short interval velocity change V1C (step S5). The third short interval integral circuit 33R primarily integrates the output signal of the acceleration sensor 10R that has been subjected to the digital transformation processing and the filtering processing over the predetermined time interval, and outputs this integral value to the non-inverting input terminal of the third short interval comparison circuit 38R, with the integral value as the third short interval velocity change V1R (step S6).

Furthermore, the first long interval integral circuit 34L primarily integrates the output signal of the acceleration sensor 10L that has been subjected to the digital transformation processing and the filtering processing over a predetermined time interval (a time interval longer than that of the short interval integral circuit), and outputs this integral value to the non-inverting input terminal of the first long interval comparison circuit 39L, with the integral value as the first long interval velocity change V2L (step S7). The second long interval integral circuit 34C primarily integrates the output signal of the acceleration sensor 10C that has been subjected to the digital transformation processing and the filtering processing over the predetermined time interval (the time interval longer than that of the short interval integral circuit), and outputs this integral value to the non-inverting input terminal of the second long interval comparison circuit 39C, with the integral value as the second long interval velocity change V2C (step S8). The third long interval integral circuit 34R primarily integrates the output signal of the acceleration sensor 10R that has been subjected to the digital transformation processing and the filtering processing over the predetermined time interval (the time interval longer than that of the short interval integral circuit), and outputs this integral value to the non-inverting input terminal of the third long interval comparison circuit 39R, with the integral value as the third long interval velocity change V2R (step S9).

Note that the processes of the above steps S4 to S9 are performed in a parallel manner.

The first short interval comparison circuit 38L then compares the first short interval velocity change V1L with the first short interval collision determination threshold value V1L_TH (step S10). If VIL> V1L-TH ("Yes"), the first short interval comparison circuit 38L outputs a high-level signal indicative of a collision with a pedestrian to the determination circuit 40 (step S11). The second short interval comparison circuit 38C compares the second short interval velocity change V1C with the second short interval collision determination threshold value V1C_TH (step S12). If V1C > V1C_TH ("Yes"), the second short interval comparison circuit 38C outputs a high-level signal indicative of a collision with a pedestrian to the determination circuit 40 (step S13). The third short interval comparison circuit 38R compares the third short interval velocity change V1R with the third short interval collision determination threshold value V1R_TH (step S 14). If V1R > V1R_TH ("Yes"), the third short interval comparison circuit 38R outputs a high-level signal indicative of a collision with a pedestrian to the determination circuit 40 (step S15).

Furthermore, the first long interval comparison circuit 39L compares the first long interval velocity change V2L with the first long interval collision determination threshold value V2L_TH (step S16). If V2L > V2L_TH ("Yes"), the first long interval comparison circuit 39L outputs a high-level signal indicative of a collision with a pedestrian to the determination circuit 40 (step S 17). The second long interval comparison circuit 39C compares the second long interval velocity change V2C with the second long interval collision determination threshold value V2C_TH (step S 18). If V2C > V2C_TH ("Yes"), the second long interval comparison circuit 39C outputs a high-level signal indicative of a collision with a pedestrian to the determination circuit 40 (step S19). The third long interval comparison circuit 39R compares the third long interval velocity change V2R with the third long interval collision determination threshold value V2R_TH (step S20). If V2R > V2R_TH ("Yes"), third long interval comparison circuit 39R outputs a high-level signal indicative of a collision with a pedestrian to the determination circuit 40 (step S21).

Note that the processes of the above steps S10 to S21 are performed in a parallel manner.

Next, if at least one high-level signal is input, then the determination circuit 40 determines that there has been a collision with a pedestrian, and outputs a high-level signal indicative of a collision with a pedestrian to the engine hood control apparatus 41 (step S22). If a high-level signal is input from the determination circuit 40, that is, if it is determined that there has been a collision with a pedestrian, then the engine hood control apparatus 41 controls the power unit 50, to thereby lift the engine hood 130 (step S23).

If in all of steps S10, S12, S14, S 16, S18, S20, the determination is "No," that is, all the velocity changes are equal to the corresponding collision determination threshold values or below, a low-level signal is output from the determination circuit 40 to the engine hood control apparatus 41. Therefore, the control over the engine hood 130 is not performed, and the process returns to step S 1 to continue monitoring a collision with a pedestrian.

As described above, according to the pedestrian protection system provided with the pedestrian collision detection apparatus according to the present embodiment, it is possible to correctly detect a collision with a pedestrian irrespective of the weight of the pedestrian or of the traveling condition of the motor vehicle 100. As a result, it is possible to securely protect a pedestrian at the time of collision.

Note that the present invention is not limited to the above embodiment. Modifications as follows are conceivable.
(1) In the above embodiment, the description has been made with reference to the case where three acceleration sensors 10L, 10C, 10R are installed in the front end portion of the motor vehicle, by way of example. However, the number of the acceleration sensors is not limited to this. It is permissible to find at least a relationship among the primary integral values (velocity changes) of the output signals of the acceleration sensors. Therefore, two or more acceleration sensors may be installed. Furthermore, in the above embodiment, the description has been made with reference to the case where primary integral values (velocity changes) of the output signals of the acceleration sensors 10L, 10C, 10R are used, by way of example. However, secondary integral values (displacement amounts) may be used.
(2) In the above embodiment, the description has been made with reference to the case where two weight regions (A zone, B zone) corresponding to children and adults along the second axis of the threshold value selection map, by way of example. However, these weight regions may be further classified into smaller weight regions. In this case, a pedestrian identification threshold value may be set for every weight region.
(3) In the above embodiment, the description has been made on the assumption that the motor vehicle 100 of a front engine type is used. However, the present invention is also applicable to, for example, a motor vehicle of a midship engine type or of a rear engine type, because it is a common practice to install an openable hood over a trunk provided in a front portion of a motor vehicle.

### [Second embodiment]

Hereunder is a description of a second embodiment of the present invention with reference to the drawings.

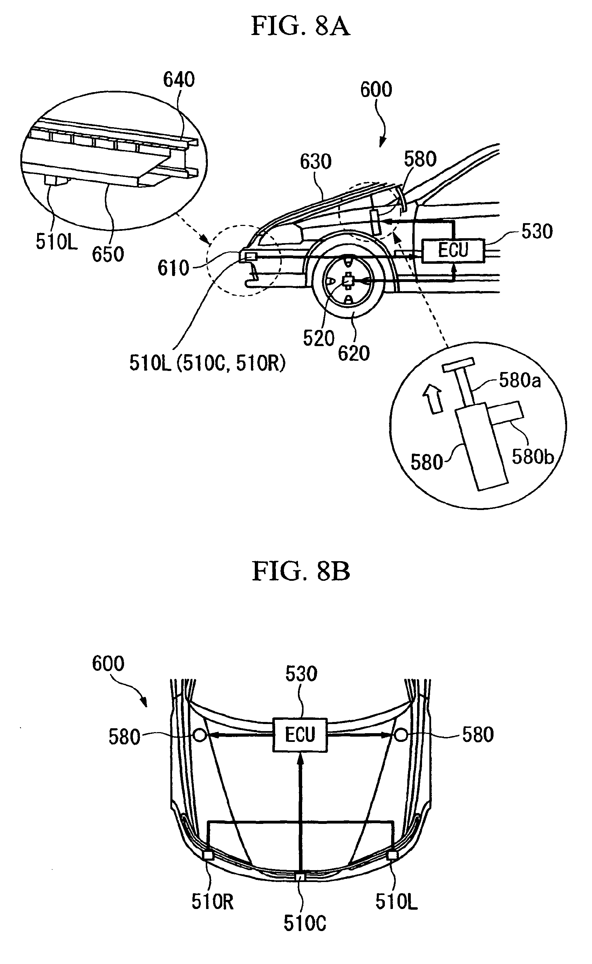

FIGS. 8A and 8B are schematic block diagrams of a pedestrian protection system provided with a pedestrian collision detection apparatus. FIG 8A is a side view of a motor vehicle 600 in which the pedestrian protection system according to the present embodiment is mounted. FIG 8B is a top view of the motor vehicle 600. Furthermore, in the present embodiment, it is assumed that the motor vehicle 600 is a motor vehicle of a front engine type. Over an engine room, there is openably provided an engine hood 630.

As shown in FIGS. 8A and 8B, the pedestrian protection system according to the present invention includes: three acceleration sensors 510L, 510C, 51 10R that are respectively installed on a left side, in the center, and on a right side along a vehicle width direction of a front end portion (front bumper 610) of the motor vehicle 600; a vehicle velocity sensor 520 that is installed on a front wheel 620 of the motor vehicle 600; an ECU (Electronic Control Unit) 530; and a power unit 580 that is an actuator for lifting a rear end portion of an engine hood 630 of the motor vehicle 600.

In an interior of the front bumper 610, there are provided a bumper beam 640 and a safety plate 650 for protecting the legs of a pedestrian when there is a collision with the pedestrian. The acceleration sensors 510L, 510C, 510R are installed on a lower portion of the safety plate 650. In general, the front bumper 610 is made of a resin. However, for the safety plate 650, an iron plate is used which is molded in a shape (for example, in a square U shape as shown in FIG 8A) such as to be likely to transform at the time of collision to absorb collision energy. That is, when the safety plate 650 is deformed by an impact when the front bumper 610 has collided with a pedestrian, the acceleration sensors 510L, 510C, 510R detect acceleration changes generated at their respective installation positions. Signals corresponding to the acceleration changes are output to the ECU 530.

The vehicle velocity sensor 520 detects a rotational velocity of the front wheel 620 as a vehicle velocity, and outputs a signal corresponding to the vehicle velocity to the ECU 530.

Output signals of the acceleration sensors 510L, 510C, 510R and an output signal of the vehicle velocity sensor 520 are input to the ECU 530. Based on these output signals, the ECU 530 determines whether or not the motor vehicle 600 has collided with a pedestrian. If determining that the motor vehicle 600 has collided, the ECU 530 controls the power unit 580, to thereby lift the engine hood 630. In the present embodiment, the vehicle velocity sensor 520 detects a rotational velocity of the front wheel 620 of the motor vehicle 600 as a vehicle velocity. However, the vehicle velocity sensor 520 may detect a variation in a rear wheel, a transmission, or the like as a vehicle velocity.

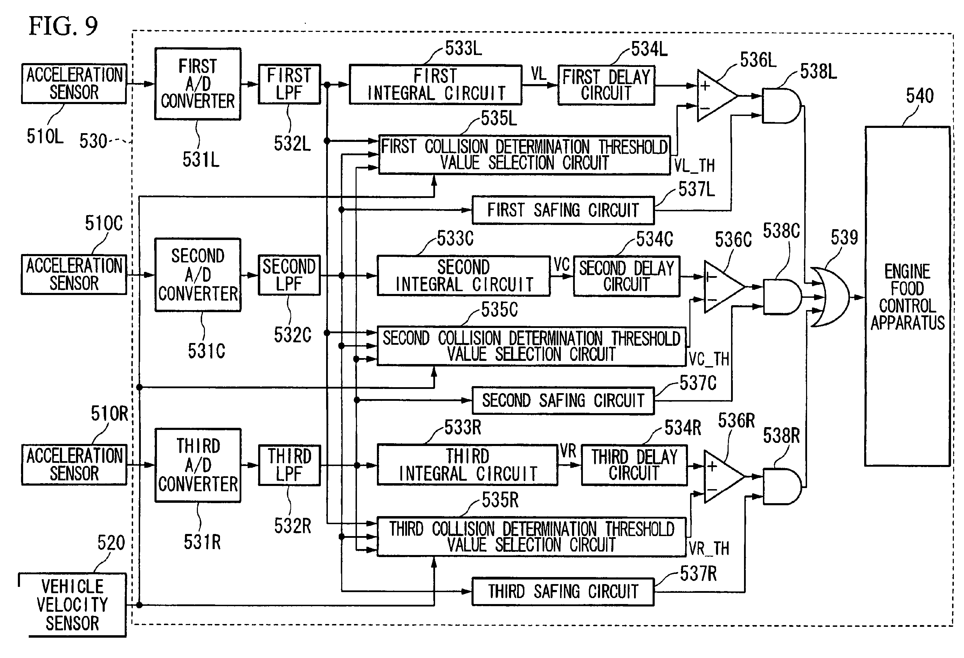

FIG. 9 is a circuit block diagram of the ECU 530. As shown in FIG. 9, the ECU 530 includes: a first A/D converter 531 L; a second A/D converter 531 C; a third A/D converter 531R; a first LPF (Low Pass Filter) 532L; a second LPF 532C; a third LPF 532R; a first integral circuit 533L; a second integral circuit 533C; a third integral circuit 533R; a first delay circuit 534L; a second delay circuit 534C; a third delay circuit 534R; a first collision determination threshold value selection circuit 535L; a second collision determination threshold value selection circuit 535C; a third collision determination threshold value selection circuit 535R; a first comparison circuit 536L; a second comparison circuit 536C; a third comparison circuit 536R; a first safing circuit 537L; a second safing circuit 537C; a third safing circuit 537R; a first AND circuit 538L; a second AND circuit 538C; a third AND circuit 538R; a collision determination circuit 539; and an engine hood control apparatus 540.

The first A/D converter 531L receives an output signal of the acceleration sensor 510L as an input, transforms the output signal into a digital signal, and outputs it to the first LPF 532L. The second A/D converter 531C receives an output signal of the acceleration sensor 510C as an input, transforms the output signal into a digital signal, and outputs it to the second LPF 532C. The third A/D converter 531 R receives an output signal of the acceleration sensor 510R as an input, transforms the output signal into a digital signal, and outputs it to the third LPF 532R.

A digital signal that is output from the first A/D converter 531 L is input to the first LPF 532L. The first LPF 532L removes frequency components at a predetermined frequency or higher included in the digital signal, and outputs the digital signal after the removal to the first integral circuit 533L, the first collision determination threshold value selection circuit 535L, the second collision determination threshold value selection circuit 535C, and the third collision determination threshold value selection circuit 535R.

A digital signal that is output from the second A/D converter 531 C is input to the second LPF 532C. The second LPF 532C removes frequency components at a predetermined frequency or higher included in the digital signal, and outputs the digital signal after the removal to the second integral circuit 533C, the first collision determination threshold value selection circuit 535L, the second collision determination threshold value selection circuit 535C, and the third collision determination threshold value selection circuit 535R.

A digital signal that is output from the third A/D converter 53 1 R is input to the third LPF 532R. The third LPF 532R removes frequency components at a predetermined frequency or higher included in the digital signal, and outputs the digital signal after the removal to the third integral circuit 533R, the first collision determination threshold value selection circuit 535L, the second collision determination threshold value selection circuit 535C, and the third collision determination threshold value selection circuit 535R.

As described above, for the safety plate 650 on which the acceleration sensors 510L, 510C, 510R are installed, an iron plate is used which is molded into a shape such as to be likely to transform at the time of collision to absorb collision energy. Therefore, the safety plate 650 is likely to vibrate while the motor vehicle is traveling. As a result, a noise at high frequency resulting from a vibration while the motor vehicle is traveling is likely to be superimposed on the output signals of the acceleration sensors 510L, 510C, 510R. For a correct detection of collision, it is required to separate a signal component resulting from an acceleration change due to a collision with a pedestrian from the aforementioned noise components. That is, cutoff frequencies of the first LPF 532L, the second LPF 532C, and the third LPF 532R are set to values that allow removal of high-frequency noise components resulting from vibration while the motor vehicle is traveling. The noise components are subject to change according to a vehicle structure of the motor vehicle 600. Therefore, it is desirable that cutoff frequencies of the LPFs 532L, 532C, 532R be appropriately set according to the vehicle structure. Furthermore, the cutoff frequencies of all the LPFs 532L, 532C, 532R need not be made equal, but may be set individually.

A digital signal that is output from the first LPF 532L is input to the first integral circuit 533L. The first integral circuit 533L primarily integrates the digital signal (that is, the signal indicative of the acceleration change detected by the acceleration sensor 510L) over a predetermined time interval, and outputs the integral value as a result of the primary integral to the first delay circuit 534L. The integral value calculated by the first integral circuit 533L denotes a velocity change at the installation position of the acceleration sensor 510L. Hereinafter, this integral value is referred to as a first velocity change VL.

A digital signal that is output from the second LPF 532C is input to the second integral circuit 533C. The second integral circuit 533C primarily integrates the digital signal (that is, the signal indicative of the acceleration change detected by the acceleration sensor 510C) over the predetermined time interval, and outputs the integral value as a result of the primary integral to the second delay circuit 534C. The integral value calculated by the second integral circuit 533C denotes a velocity change at the installation position of the acceleration sensor 510C. Hereinafter, this integral value is referred to as a second velocity change VC.

A digital signal that is output from the third LPF 532R is input to the third integral circuit 533R. The third integral circuit 533R primarily integrates the digital signal (that is, the signal indicative of the acceleration change detected by the acceleration sensor 510R) over the predetermined time interval, and outputs the integral value as a result of the primary integral to the third delay circuit 534R. The integral value calculated by the third integral circuit 533R denotes a velocity change at the installation position of the acceleration sensor 510R. Hereinafter, this integral value is referred to as a third velocity change VR.

The first delay circuit 534L performs delay processing of the integral value (first velocity change VL) that is input from the first integral circuit 533L, and outputs the first velocity change VL after the delay processing to a non-inverting input terminal of the first comparison circuit 536L. The delay time in the first delay circuit 534L is set in consideration of the time from a selection of the first collision determination threshold value VL_TH by the first collision determination threshold value selection circuit 535L, which will be described later, to an output of the first collision determination threshold value VL_TH to an inverting input terminal of the first comparison circuit 536L.

The second delay circuit 534C performs delay processing of the integral value (second velocity change VC) that is input from the second integral circuit 533C, and outputs the second velocity change VC after the delay processing to a non-inverting input terminal of the second comparison circuit 536C. The delay time in the second delay circuit 534C is set in consideration of the time from a selection of the second collision determination threshold value VC_TH by the second collision determination threshold value selection circuit 535C, which will be described later, to an output of the second collision determination threshold value VC_TH to an inverting input terminal of the second comparison circuit 536C.

The third delay circuit 534R performs delay processing of the integral value (third velocity change VR) that is input from the third integral circuit 533R, and outputs the third velocity change VR after the delay processing to a non-inverting input terminal of the third comparison circuit 536R. The delay time in the third delay circuit 534R is set in consideration of the time from a selection of the third collision determination threshold value VR_TH by the third collision determination threshold value selection circuit 535R, which will be described later, to an output of the third collision determination threshold value VR_TH to an inverting input terminal of the third comparison circuit 536R.

The first collision determination threshold value selection circuit 535L is provided in correspondence to the acceleration sensor 510L. The first collision determination threshold value selection circuit 535L selects a collision determination threshold value related to the acceleration sensor 510L corresponding to itself, according to an output change factor that is identified based on a relationship between an integral value of an output signal of the acceleration sensor 510L corresponding to itself, and integral values of output signals of the other acceleration sensors 510C, 510R.

To be more specific, a digital signal that is output to the first collision determination threshold value selection circuit 535L from the first LPF 532L, a digital signal that is output from the second LPF 532C, a digital signal that is output from the third LPF 532R, and an output signal of the vehicle velocity sensor 520 are input. Based on these signals, the first collision determination threshold value selection circuit 535L selects the first collision determination threshold value VL_TH related to the acceleration sensor 510L corresponding to itself, and outputs this selection value to the inverting input terminal of the first comparison circuit 536L.

Hereunder is a detailed description of a circuit configuration of the first collision determination threshold value selection circuit 535L.

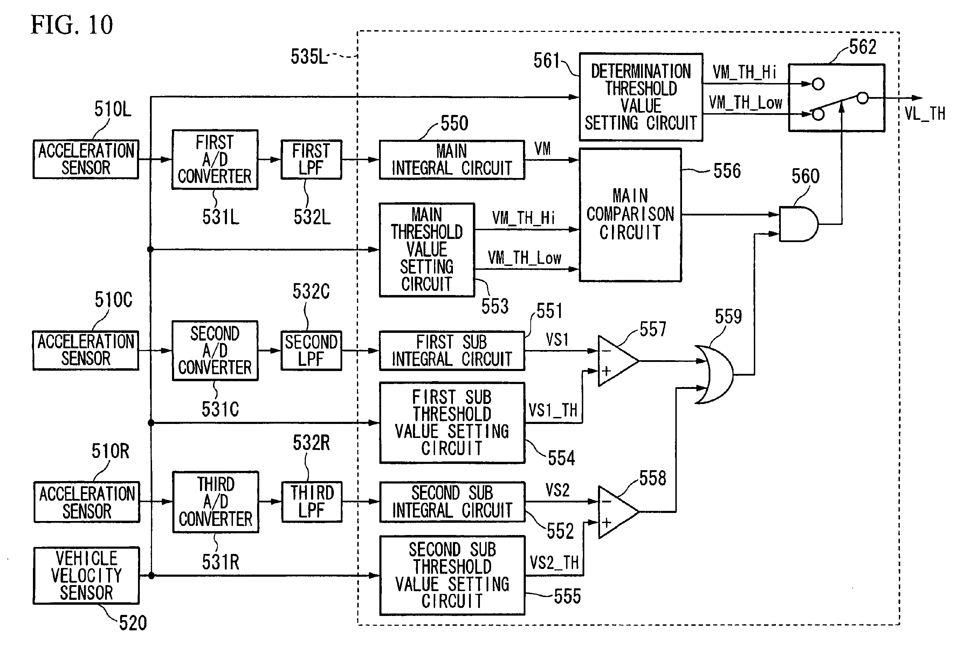

FIG 10 is a circuit block diagram showing the first collision determination threshold value selection circuit 535L. As shown in FIG 10, the first collision determination threshold value selection circuit 535L includes: a main integral circuit 550; a first sub integral circuit 551; a second sub integral circuit 552; a main threshold value setting circuit 553; a first sub threshold value setting circuit 554; a second sub threshold value setting circuit 555; a main comparison circuit 556; a first sub comparison circuit 557; a second sub comparison circuit 558; an OR circuit 559; an AND circuit 560; a determination threshold value setting circuit 561, and a selection circuit 562. Among the above constituent parts, the main comparison circuit 556, the first sub comparison circuit 557, the second sub comparison circuit 558, the OR circuit 559, and the AND circuit 560 constitute an output change factor identification circuit.

A digital signal that is output from the first LPF 532L is input to the main integral circuit 550. The main integral circuit 550 primarily integrates the digital signal (that is, the signal indicative of the acceleration change detected by the acceleration sensor 510L corresponding to itself) over a predetermined time interval, and outputs the integral value as a result of the primary integral to the main comparison circuit 556. Hereinafter, this integral value is referred to as a main velocity change VM. A digital signal that is output from the second LPF 532C is input to the first sub integral circuit 551. The first sub integral circuit 551 primarily integrates the digital signal (that is, the signal indicative of the acceleration change detected by another acceleration sensor 510C) over a predetermined time interval, and outputs the integral value as a result of the primary integral to a non-inverting input terminal of the first sub comparison circuit 557. Hereinafter, this integral value is referred to as a first sub velocity change VS1. A digital signal that is output from the third LPF 532R is input to the second sub integral circuit 552. The second sub integral circuit 552 primarily integrates the digital signal (that is, the signal indicative of the acceleration change detected by the other acceleration sensor 510R) over a predetermined time interval, and outputs the integral value as a result of the primary integral to a non-inverting input terminal of the second sub comparison circuit 558. Hereinafter, this integral value is referred to as a second sub velocity change VS2.

The integral time intervals in the main integral circuit 550, the first sub integral circuit 551, and the second sub integral circuit 552 may be set equal to or different from those of the first integral circuit 533L, the second integral circuit 533C, and the third integral circuit 533R, respectively. For example, if the respective integral time intervals are set equal, the main velocity change VM is equal to the first velocity change VL, the first sub velocity change VS1 is equal to the second velocity change VC, and the second sub velocity change VS2 is equal to the third velocity change VR.

An output signal of the vehicle velocity sensor 520 is input to the main threshold value setting circuit 553. The main threshold value setting circuit 553 sets a main circuit high-side threshold value VM_TH_Hi and a main circuit low-side threshold value VM_TH_Low for comparison with the main velocity change VM according to a vehicle velocity detected by the vehicle velocity sensor 520, and outputs these threshold values to the main comparison circuit 556. An output signal of the vehicle velocity sensor 520 is input to the first sub threshold value setting circuit 554. The first sub threshold value setting circuit 554 sets a sub circuit threshold value VS1_TH for comparison with the first sub velocity change VS1 according to a vehicle velocity detected by the vehicle velocity sensor 520, and outputs this threshold value to an inverting input terminal of the first sub comparison circuit 557. An output signal of the vehicle velocity sensor 520 is input to the second sub threshold value setting circuit 555. The second sub threshold value setting circuit 555 sets a sub circuit threshold value VS2_TH for comparison with the second sub velocity change VS2 according to a vehicle velocity detected by the vehicle velocity sensor 520, and outputs this threshold value to an inverting input terminal of the second sub comparison circuit 558.

These threshold values have different optimal values depending on the vehicle velocity. Therefore, it is desirable that these threshold values be appropriately modified according to the vehicle velocity detected by the vehicle velocity sensor 520. To be more specific, the higher the vehicle velocity is, the larger the acceleration change is at the time of collision. Therefore, the threshold values are set to high values.

The main velocity change VM, the main circuit high-side threshold value VM_TH_Hi, and the main circuit low-side threshold value VM_TH_Low are input to the main comparison circuit 556. The main comparison circuit 556 outputs a high-level signal to the AND circuit 560 in a period from the time when the main velocity change VM exceeds the main circuit high-side threshold value VM_TH_Hi to the time when the main velocity change VM reaches the main circuit low-side threshold value VM_TH_Low. On the other hand, in a period other than this, the main comparison circuit 556 outputs a low-level signal to the AND circuit 560.

The first sub comparison circuit 557 is, for example, a comparator. It compares the first sub velocity change VS1 that is input to the inverting input terminal with the sub circuit threshold value VS1_TH that is input to the non-inverting input terminal, and outputs a signal according to the comparison result to the OR circuit 559. To be more specific, if the first sub velocity change VS1 exceeds the sub circuit threshold value VS1_TH, then a high-level signal is output. The second sub comparison circuit 558 is, for example, a comparator. It compares the second sub velocity change VS2 that is input to the inverting input terminal with the sub circuit threshold value VS2_TH that is input to the non-inverting input terminal, and outputs a signal according to the comparison result to the OR circuit 559. To be more specific, if the second sub velocity change VS2 exceeds the sub circuit threshold value VS2_TH, then a high-level signal is output.

The OR circuit 559 outputs an OR signal between an output signal of the first sub comparison circuit 557 and an output signal of the second sub comparison circuit 558 to the AND circuit 560. The AND circuit 560 outputs an AND signal between an output signal of the main comparison circuit 556 and an output signal of the OR circuit 559 to the selection circuit 562.

The output change factor identification circuit is made of: the main comparison circuit 556, the first sub comparison circuit 557, the second sub comparison circuit 558, the OR circuit 559, and the AND circuit 560. In the period from the time when an integral value (the main velocity change VM) calculated by the main integral circuit 550 exceeds the main circuit high-side threshold value VM_TH_Hi to the time when the integral value reaches the main circuit low-side threshold value VM_TH_Low, the output change factor identification circuit determines whether or not the integral values (the first sub velocity change VS1, the second sub velocity change VS2) calculated by the first sub integral circuit 551 and the second sub integral circuit 552 have respectively exceeded the sub circuit threshold values (VS1_TH, VS2_TH). As a result, the output change factor of the acceleration sensors is identified.

As will be described in detail later, the output change factor identification circuit according to the present embodiment identifies the output change factor in the period from the time when the main velocity change VM calculated by the main integral circuit 550 exceeds the main circuit high-side threshold value VM_TH_Hi to the time when the main velocity change VM reaches the main circuit low-side threshold value VM_TH_Low. That is, in this period, if the first sub velocity change VS1 and the second sub velocity change VS2 that are calculated by the first sub integral circuit 551 and the second sub integral circuit 552 have respectively exceeded the sub circuit threshold values VS1_TH, VS2_TH, then the output change factor identification circuit identifies that the output change factor of the acceleration sensors is a vibration while the motor vehicle is traveling on a bad road or during operation of an ABS, and outputs a high-level signal indicative of this identification result from the AND circuit 560.

Furthermore, also in a period other than the above, that is, other than the period from the time when the main velocity change VM exceeds the high-side threshold value VM_TH_Hi to the time when the main velocity change VM reaches the low-side threshold value VM_TH_Low, the output change factor identification circuit identifies the output change factor. That is, in this period, if at least one of the first sub velocity change VS1 and the second sub velocity change VS2 does not exceed the corresponding sub circuit threshold value, then the output change factor identification circuit identifies that the output change factor of the acceleration sensors is a collision with a pedestrian, and outputs a low-level signal indicative of this identification result from the AND circuit 560.

An output signal of the vehicle velocity sensor 520 is input to the determination threshold value setting circuit 561. The determination threshold value setting circuit 561 sets a collision determination threshold value related to the acceleration sensor 510L corresponding to itself for every output change factor, according to a vehicle velocity detected by the vehicle velocity sensor 520. To be more specific, the determination threshold value setting circuit 561 sets a high-side collision determination threshold value VL_TH_Hi that corresponds to the output change factor of "a vibration while the motor vehicle is traveling on a bad road or during operation of an ABS," and also sets a low-side collision determination threshold value VL_TH_Low that corresponds to the output change factor of "a collision with a pedestrian." The determination threshold value setting circuit 561 then outputs these collision determination threshold values to the selection circuit 562.

. The selection circuit 562 selects the collision determination threshold value that corresponds to the output signal of the AND circuit 560 (that is, the identification result of the output change factor by the output change factor identification circuit) from among the high-side collision determination threshold value VL_TH_Hi and the low-side collision determination threshold value VL_TH_Low, and outputs this selected collision determination threshold value to the inverting input terminal of the first comparison circuit 536L, with the selected collision determination threshold value as a first collision determination threshold value VL_TH (see FIG. 9). To be more specific, if a high-level signal is input from the AND circuit 560, then the selection circuit 562 selects the high-side collision determination threshold value VL_TH_Hi that corresponds to the output change factor of "a vibration while the motor vehicle is traveling on a bad road or during operation of an ABS." If a low-level signal is input from the AND circuit 560, then the selection circuit 562 selects the low-side collision determination threshold value VL_TH_Low that corresponds to the output change factor of "a collision with a pedestrian."

The first collision determination threshold value selection circuit 535L corresponding to the acceleration sensor 510L has been described above. Hereunder is a continued description, with reference back to FIG 9.

The second collision determination threshold value selection circuit 535C is provided in correspondence to the acceleration sensor 510C. The second collision determination threshold value selection circuit 535C selects a collision determination threshold value related to the acceleration sensor 510C corresponding to itself, according to an output change factor that is identified based on a relationship between an integral value of an output signal of the acceleration sensor 510C corresponding to itself, and integral values of output signals of the other acceleration sensors 510L, 510R.

To be more specific, a digital signal that is output to the second collision determination threshold value selection circuit 535C from the first LPF 532L, a digital signal that is output from the second LPF 532C, a digital signal that is output from the third LPF 532R, and an output signal of the vehicle velocity sensor 520 are input. Based on these signals, the second collision determination threshold value selection circuit 535C selects the second collision determination threshold value VC_TH related to the acceleration sensor 510C corresponding to itself, and outputs this selection value to the inverting input terminal of the second comparison circuit 536C.

The second collision determination threshold value selection circuit 535C has the same circuit configuration as the aforementioned first collision determination threshold value selection circuit 535L, except for the relationship between the acceleration sensor related to itself and the other acceleration sensors. Therefore, the detailed description thereof is omitted.

The third collision determination threshold value selection circuit 535R is provided in correspondence to the acceleration sensor 510R. The third collision determination threshold value selection circuit 535R selects a collision determination threshold value related to the acceleration sensor 510R corresponding to itself, according to an output change factor that is identified based on a relationship between an integral value of an output signal of the acceleration sensor 510R corresponding to itself, and integral values of output signals of the other acceleration sensors 510L, 510C.

To be more specific, a digital signal that is output to the third collision determination threshold value selection circuit 535R from the first LPF 532L, a digital signal that is output from the second LPF 532C, a digital signal that is output from the third LPF 532R, and an output signal of the vehicle velocity sensor 520 are input. Based on these signals, the third collision determination threshold value selection circuit 535R selects the third collision determination threshold value VR_TH related to the acceleration sensor 510R corresponding to itself, and outputs this selection value to the inverting input terminal of the third comparison circuit 536R.

The third collision determination threshold value selection circuit 535R has the same circuit configuration as the aforementioned first collision determination threshold value selection circuit 535L, except for the relationship between the acceleration sensor related to itself and the other acceleration sensors. Therefore, the detailed description thereof is omitted.

The first comparison circuit 536L is, for example, a comparator. It compares the first velocity change VL that is input to the non-inverting input terminal with the first collision determination threshold value VL_TH that is input to the inverting input terminal, and outputs a signal according to the comparison result to the first AND circuit 538L. To be more specific, if the first velocity change VL exceeds the first collision determination threshold value VL_TH, then the first comparison circuit 536L outputs a high-level signal.

The second comparison circuit 536C is, for example, a comparator. It compares the second velocity change VC that is input to the non-inverting input terminal with the second collision determination threshold value VC_TH that is input to the inverting input terminal, and outputs a signal according to the comparison result to the second AND circuit 538C. To be more specific, if the second velocity change VC exceeds the second collision determination threshold value VC_TH, then the second comparison circuit 536C outputs a high-level signal.

The third comparison circuit 536R is, for example, a comparator. It compares the third velocity change VR that is input to the non-inverting input terminal with the third collision determination threshold value VR_TH that is input to the inverting input terminal, and outputs a signal according to the comparison result to the third AND circuit 538R. To be more specific, if the third velocity change VR exceeds the third collision determination threshold value VR_TH, then the third comparison circuit 536R outputs a high-level signal.

The first safing circuit 537L is a safing circuit that is provided in correspondence to the acceleration sensor 510L. Here, safing refers to processing for adopting, as a collision determination result of the acceleration sensor 510L, an AND operation between a collision determination result based on an output signal of the acceleration sensor 510L and a collision determination result based on an output signal of the acceleration sensor 510C which is installed closest to the acceleration sensor 510L, instead of making a collision determination based only on an output signal of the acceleration sensor 510L alone. That is, the first safing circuit 537L makes a collision determination based on an output signal of the acceleration sensor 510C which is installed closest to the acceleration sensor 510L, and outputs a signal corresponding to the determination result to the first AND circuit 538L.

Hereunder is a detailed description of a circuit configuration of this first safing circuit 537L.

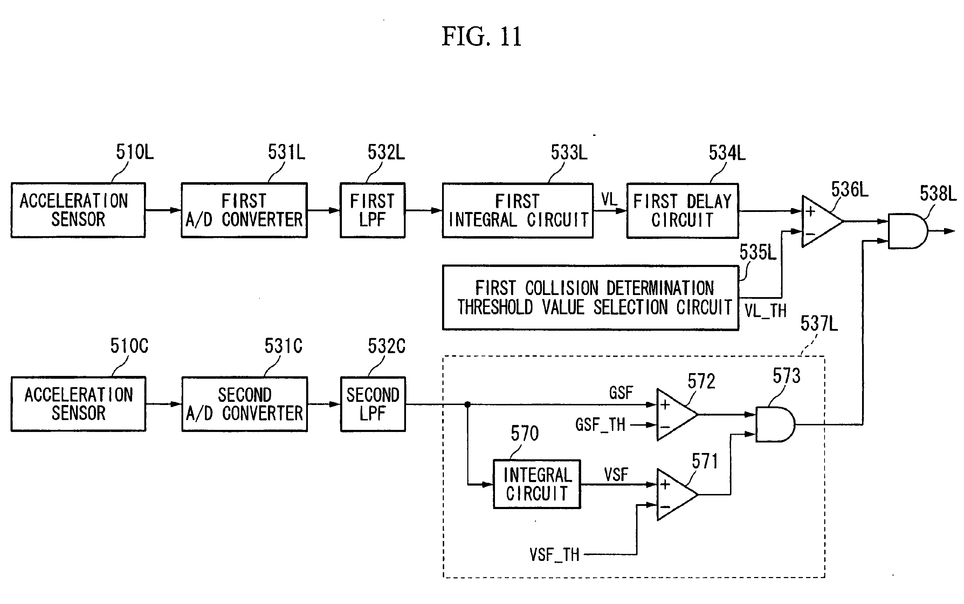

FIG 11 is a circuit block diagram of the first safing circuit 537L. As shown in FIG 11, the first safing circuit 537L includes: an integral circuit 570; a first comparator 571; a second comparator 572; and an AND circuit 573.

The integral circuit 570 primarily integrates the output signal of the second LPF 532C (that is, the signal that signifies the acceleration change detected by the acceleration sensor 510C) over a predetermined time interval, and outputs the integral value as a result of the primary integral to a non-inverting input terminal of the first comparator 571. Hereinafter, this integral value is referred to as a safing velocity change VSF. The first comparator 571 compares the safing velocity change VSF that is input to the non-inverting input terminal with a first safing collision determination threshold value VSF_TH that is input to an inverting input terminal, and outputs a signal corresponding to the comparison result to the AND circuit 573. To be more specific, if the safing velocity change VSF exceeds the first safing collision determination threshold value VSF_TH, then the first comparator 571 outputs a high-level signal.

The second comparator 572 compares an output signal GSF of the second LPF 532C that is input to a non-inverting input terminal with a second safing collision determination threshold value GSF_TH that is input to an inverting input terminal, and outputs a signal corresponding to the comparison result to the AND circuit 573. To be more specific, if the signal GSF exceeds the second safing collision determination threshold value GSF_TH, then the second comparator 572 outputs a high-level signal. The AND circuit 573 outputs an AND signal between the output signal of the first comparator 571 and the output signal of the second comparator 572 to the first AND circuit 538L.

The first safing collision determination threshold value VSF_TH and the second safing collision determination threshold value GSF_TH as described above are set so that even if the output change of the acceleration sensor 510C is small, the outputs of the first comparator 571 and the second comparator 572 are in a high level. That is, even if a slight impact is applied to the motor vehicle 600, the first safing circuit 537L is capable of outputting a high-level signal.

The first safing circuit 537L corresponding to the acceleration sensor 510L has been described above. Hereunder is a continued description, with reference back to FIG. 9.

The second safing circuit 537C is a safing circuit that is provided in correspondence to the acceleration sensor 510C. The second safing circuit 537C makes a collision determination based on an output signal of the acceleration sensor 510R (which may be the acceleration sensor 510L, instead) which is installed closest to the acceleration sensor 510C, and outputs a signal corresponding to the determination result to the second AND circuit 538C. Note that the second safing circuit 537C has a similar circuit configuration to that of the first safing circuit 537L. Therefore, a detailed description thereof is omitted.

The third safing circuit 537R is a safing circuit that is provided in correspondence to the acceleration sensor 510R. The third safing circuit 537R makes a collision determination based on an output signal of the acceleration sensor 510C which is installed closest to the acceleration sensor 510R, and outputs a signal corresponding to the determination result to the third AND circuit 538R. Note that the third safing circuit 537R has a similar circuit configuration to that of the first safing circuit 537L. Therefore, the detailed description thereof is omitted.

The first AND circuit 538L outputs an AND signal between the output signal of the first comparison circuit 536L and the output signal of the first safing circuit 537L to the collision determination circuit 539. The second AND circuit 538C outputs an AND signal between the output signal of the second comparison circuit 536C and the output signal of the second safing circuit 537C to the collision determination circuit 539. The third AND circuit 538R outputs an AND signal between the output signal of the third comparison circuit 536R and the output signal of the third safing circuit 537R to the collision determination circuit 539.

The collision determination circuit 539 is, for example, an OR circuit. If at least one of the output signals of the first AND circuit 538L, the second AND circuit 538C, and the third AND circuit 538R is a high-level signal, that is, if at least one of the integral values (velocity changes) corresponding to the acceleration sensors exceeds the collision determination threshold value, then the collision determination circuit 539 determines that there has been a collision with a pedestrian, and outputs a high-level signal indicative of the determination result to the engine hood control apparatus 540.

In this manner, in the present embodiment, the pedestrian collision detection apparatus is made of: the acceleration sensors 510L, 510C, 510R; the first A/D converter 531 L; the second A/D converter 531 C; the third A/D converter 531 R; the first LPF 532L; the second LPF 532C; the third LPF 532R; the first integral circuit 533L; the second integral circuit 533C; the third integral circuit 533R; the first delay circuit 534L; the second delay circuit 534C; the third delay circuit 534R; the first collision determination threshold value selection circuit 535L; the second collision determination threshold value selection circuit 535C; the third collision determination threshold value selection circuit 535R; the first comparison circuit 536L; the second comparison circuit 536C; the third comparison circuit 536R; the first safing circuit 537L; the second safing circuit 537C; the third safing circuit 537R; the first AND circuit 538L; the second AND circuit 538C; the third AND circuit 538R; and the collision determination circuit 539.

If a high-level signal is input from the collision determination circuit 539, that is, if it is determined that there has been a collision with a pedestrian, then the engine hood control apparatus 540 controls the power unit 580, to thereby lift the engine hood 630.

The ECU 530 has been described in detail above. Hereunder is a continued description, with reference back to FIGS. 8A and 8B. The power unit 580 is made of, for example, an air cylinder. It lifts the engine hood 630 with a shaft 580a lifted by the control of the ECU 530 (engine hood control apparatus 540).

Furthermore, in the power unit 580, there is provided a shaft lock mechanism 580b. The power unit 580 further includes a mechanism for maintaining a lifted position of the engine hood 630 by locking the shaft 580a by means of the shaft lock mechanism 580b after the engine hood 630 is lifted. Note that as the power unit 580 for lifting the engine hood 630, another actuator may be used such as an airbag that inflates at the time of determining of a collision.

Next is a description of an operation of the pedestrian protection system according to the present embodiment configured as above. In the following, a description relating to operations of the first safing circuit 537L, the second safing circuit 537C, and the third safing circuit 537R is omitted. It is assumed that high-level signals are always output from these safing circuits.

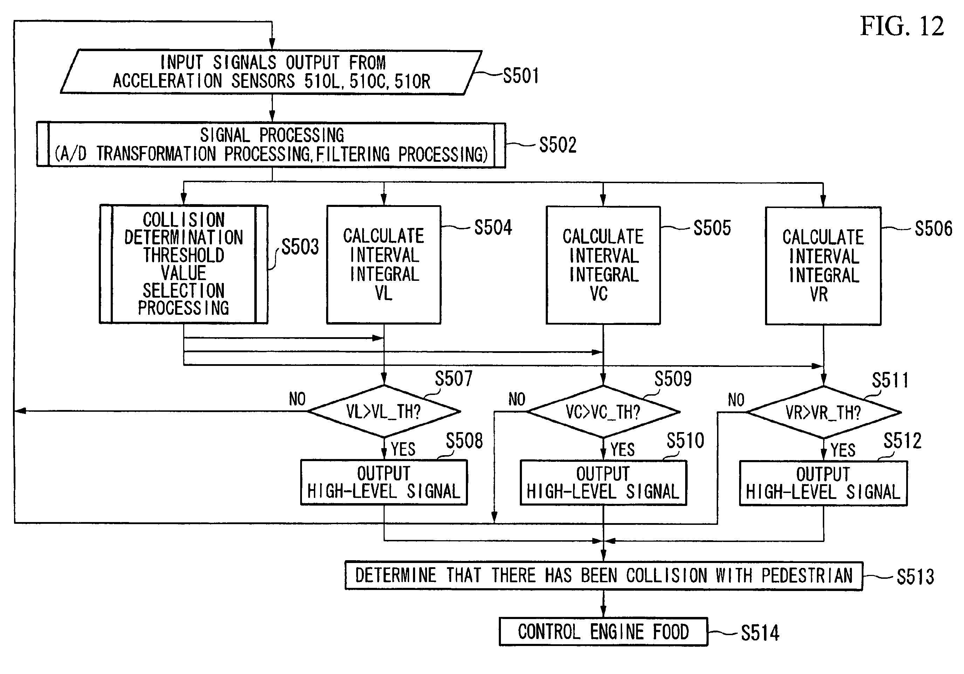

FIG. 12 is a flow chart showing an operation of the pedestrian protection system according to the present embodiment. As shown in FIG. 12, output signals are input to the ECU 530 from the acceleration sensors 510L, 510C, 510R, the output signals being in accordance with acceleration changes at the installation positions of the acceleration sensors 510L, 510C, 510R (step S501). The output signals of the acceleration sensors 510L, 510C, 510R that have been respectively input to the ECU 530 are subjected to digital transformation processing by the first A/D converter 531 L, the second A/D converter 531C, and the third A/D converter 53 1 R, and are also respectively subjected to filtering processing (removal of high-frequency noise components resulting from a vibration while the motor vehicle is traveling) by the first LPF 532L, the second LPF 532C, and the third LPF 532R (step S502).

The output signal of the acceleration sensor 510L, which have been subjected to the digital transformation processing and the filtering processing as described above, is input to the first integral circuit 533L, the first collision determination threshold value selection circuit 535L, the second collision determination threshold value selection circuit 535C, and the third collision determination threshold value selection circuit 535R. The output signal of the acceleration sensor 510C is input to the second integral circuit 533C, the first collision determination threshold value selection circuit 535L, the second collision determination threshold value selection circuit 535C, and the third collision determination threshold value selection circuit 535R. The output signal of the acceleration sensor 510R is input to the third integral circuit 533R, the first collision determination threshold value selection circuit 535L, the second collision determination threshold value selection circuit 535C, and the third collision determination threshold value selection circuit 535R.

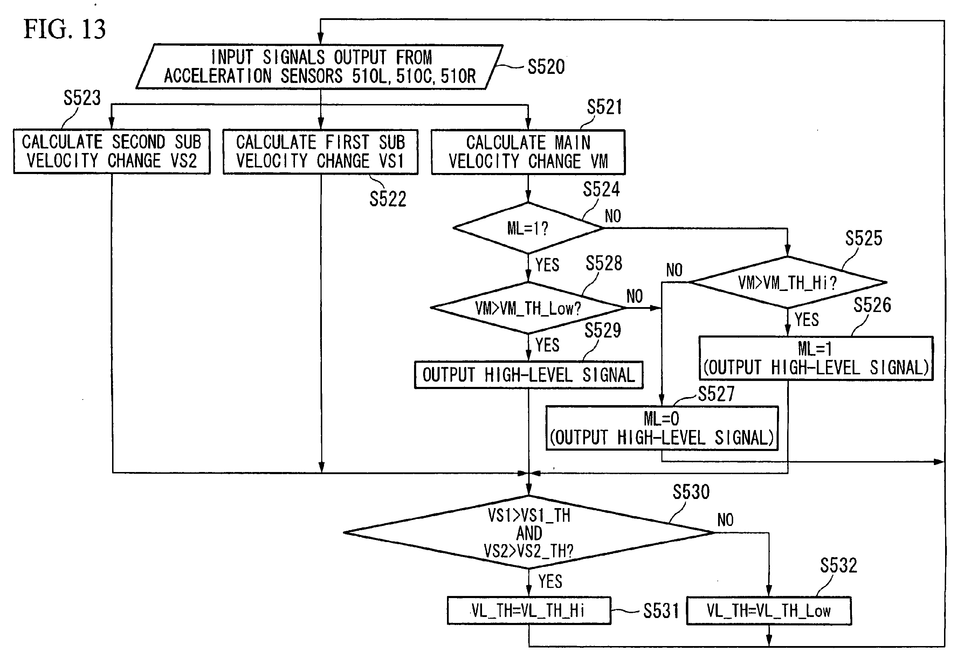

Then, in each of the first collision determination threshold value selection circuit 535L, the second collision determination threshold value selection circuit 535C, and the third collision determination threshold value selection circuit 535R, a selection of a collision determination threshold value is made (step S503). Hereunder is a detailed description of selection processing of a collision determination threshold value in this step S503, with reference to the flow chart of FIG 13. This selection processing of a collision determination threshold value is common in the first collision determination threshold value selection circuit 535L, the second collision determination threshold value selection circuit 535C, and the third collision determination threshold value selection circuit 535R. Therefore, with the first collision determination threshold value selection circuit 535L as a representative, the selection processing of a collision determination threshold value therein will be described.

Furthermore, at this time, in the first collision determination threshold value selection circuit 535L, it is assumed that: the main threshold value setting circuit 553 sets a main circuit high-side threshold value VM_TH_Hi and a low-side threshold value VM_TH_Low according to the vehicle velocity detected by the vehicle velocity sensor 520, and outputs these to the main comparison circuit 556; the first sub threshold value setting circuit 554 sets a sub circuit threshold value VS1_TH according to the vehicle velocity detected by the vehicle velocity sensor 520, and outputs this to an inverting input terminal of the first sub comparison circuit 557; and the second sub threshold value setting circuit 555 sets a sub circuit threshold value VS2_TH according to the vehicle velocity detected by the vehicle velocity sensor 520, and outputs this to an inverting input terminal of the second sub comparison circuit 558. Furthermore, it is assumed that for the acceleration sensor 510L, the determination threshold value setting circuit 561 sets a high-side collision determination threshold value VL_TH_Hi corresponding to the output change factor of "a vibration while the motor vehicle is traveling on a bad road or during operation of an ABS" and a low-side collision determination threshold value VL_TH_Low corresponding to the output change factor of "a collision with a pedestrian" according to the vehicle velocity detected by the vehicle velocity sensor 520, and outputs these to the selection circuit 562.

As shown in FIG 13, the output signals of the acceleration sensors 510L, 510C, 510R that have been subjected to the digital transformation processing and the filtering processing are input respectively to the main integral circuit 550, the first sub integral circuit 551, and the second sub integral circuit 552 in the first collision determination threshold value selection circuit 535L (step S520). The main integral circuit 550 calculates the main velocity change VM, and outputs it to the main comparison circuit 556, the main velocity change VM being a primary integral value of the output signal of the acceleration sensor 510L that has been input (step S521). The first sub integral circuit 551 calculates the first sub velocity change VS 1, and outputs it to a non-inverting input terminal of the first sub comparison circuit 557, the first sub velocity change VS1 being a primary integral value of the output signal of the acceleration sensor 510C that has been input (step S522). The second sub integral circuit 552 calculates the second sub velocity change VS2, and outputs it to a non-inverting input terminal of the second sub comparison circuit 558, the second sub velocity change VS2 being a primary integral value of the output signal of the acceleration sensor 510R that has been input (step S523).

The main comparison circuit 556 determines whether or not a control variant ML = 1 (step S524). If the determination is "No," then the main comparison circuit 556 determines whether or not the main velocity change VM is greater than the main circuit high-side threshold value VM_TH_Hi (step S525). In this step S525, if the determination is "Yes," that is, if VM > VM_TH_Hi, then the main comparison circuit 556 sets ML = 1, which indicates that the main velocity change VM has exceeded the main circuit high-side threshold value VM_TH_Hi, and also outputs a high-level signal to the AND circuit 560 (step S526). On the other hand, in the above S525, if the determination is "No," that is, if VM ≤ VM_TH_Hi, then the main comparison circuit 556 sets ML = 0, and also outputs a low-level signal to the AND circuit 560 (step S527).

Furthermore, in the above step S524, if the determination is "Yes," that is, if the main velocity change VM is above the main circuit high-side threshold value VM_TH_Hi, then the main comparison circuit 556 determines whether or not the main velocity change VM is greater than the main circuit low-side threshold value VM_TH_Low (step S528). In this step S528, if the determination is "Yes," that is, if VM > VM_TH_Low, then the main comparison circuit 556 continues to output a high-level signal (step S529). On the other hand, in the above step S528, if the determination is "No," that is, if VM ≤ VM_TH_Low, the main comparison circuit 556 moves the process to step S527 and sets ML = 0, and also outputs a low-level signal to the AND circuit 560.

Through the processes of steps S524 to S529 as described above, a high-level signal is output from the main comparison circuit 556 to the AND circuit 560 in a period from the time when the main velocity change VM exceeds the main circuit high-side threshold value VM_TH_Hi to the time when the main velocity change VM reaches the main circuit low-side threshold value VM_TH_Low. On the other hand, in a period other than this, a low-level signal is output to the AND circuit 560.

Next, the first sub velocity change VS1 and the first sub circuit threshold value VS1_TH are compared by the first sub comparison circuit 557. Furthermore, the second sub velocity change VS2 and the first sub circuit threshold value VS2_TH are compared by the second sub comparison circuit 558 (step S530). If VS1 > VS1_TH and VS2 > VS2_TH ("Yes"), then a high-level signal is output from the AND circuit 560 to the selection circuit 562, and the high-side collision determination threshold value VL_TH_Hi that corresponds to the output change factor of "a vibration while the motor vehicle is traveling on a bad road or during operation of an ABS" is selected as the first collision determination threshold value VL_TH by the selection circuit 562 (step S531).

On the other hand, in the above step S531, if the determination is "No," a low-level signal is output from the AND circuit 560 to the selection circuit 562, and the low-side collision determination threshold value VL_TH_Low that corresponds to the output change factor of "a collision with a pedestrian" is selected as the first collision determination threshold value VL_TH by the selection circuit 562 (step S532).

If in a period from the time when the main velocity change VM exceeds the main circuit high-side threshold value VM_TH_Hi to the time when the main velocity change VM reaches the main circuit low-side threshold value VM_TH_Low through the operation as described above, the first sub velocity change VS1 and the second sub velocity change VS2 that are calculated by the first sub integral circuit 551 and the second sub integral circuit 552 respectively exceed the sub circuit threshold values VS1_TH, VS2_TH, then the output change factor of the acceleration sensors is identified as "a vibration while the motor vehicle is traveling on a bad road or during operation of an ABS." In this case, the high-side collision determination threshold value VL_TH_Hi is selected as the first collision determination threshold value VL_TH. On the other hand, in the case other than the above (if at least one of the first sub velocity change VS1 and the second sub velocity change VS2 does not exceed the corresponding sub circuit threshold value), the output change factor is identified as "a collision with a pedestrian." In this case, the low-side collision determination threshold value VL_TH_Low is selected as the first collision determination threshold value VL_TH.

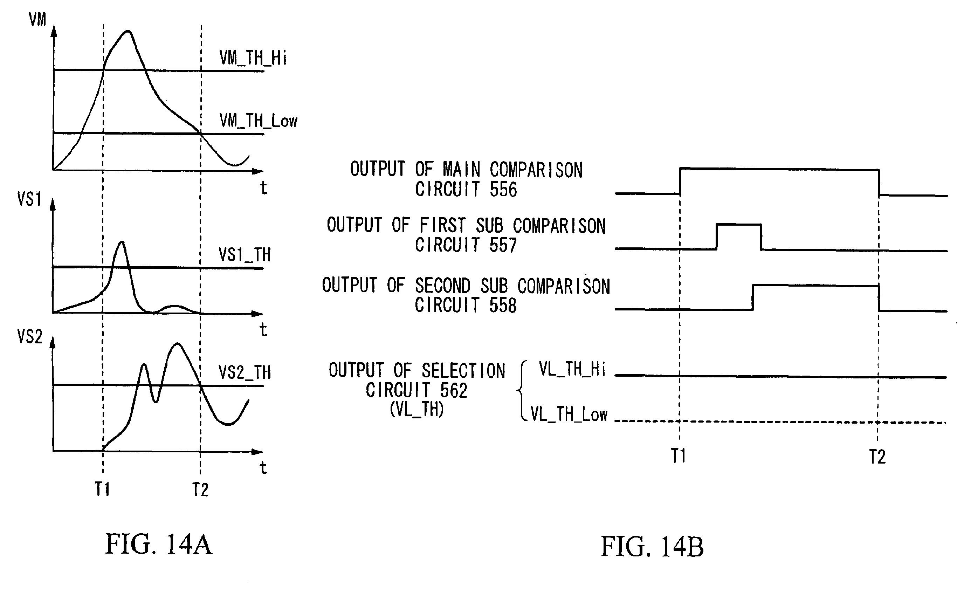

Such selection processing of a collision determination threshold value will be described in further detail with reference to FIG. 14A to FIG. 16B. FIG 14A is a fist case that shows a relationship between the main velocity change VM and the main circuit high-side threshold value VM_TH_Hi as well as the low-side threshold value VM_TH_Low, a relationship between the first sub velocity change VS1 and the first sub circuit threshold value VS1_TH, and a relationship between the second sub velocity change VS2 and the second sub circuit threshold value VS2_TH. FIG 14B is a timing chart of an output signal of the main comparison circuit 556, an output signal of the first sub comparison circuit 557, an output signal of the second sub comparison circuit 558, and an output signal of the selection circuit 562 (first collision determination threshold value VL_TH) in the case where the main velocity change VM, the first sub velocity change VS1, and the second sub velocity change VS2 as shown in FIG 14A have occurred. Note that in FIG 14B, the high-side collision determination threshold value VL_TH_Hi is selected as the first collision determination threshold value VL_TH in a default state.

As shown in FIG 14A, in the first case, it is assumed that the first sub velocity change VS1 exceeds the sub circuit threshold value VS1_TH and also the second sub velocity change VS2 exceeds the sub circuit threshold value VS2_TH in a period T1-T2 from the time when the main velocity change VM exceeds the main circuit high-side threshold value VM_TH_Hi to the time when the main velocity change VM reaches the main circuit low-side threshold value VM_TH_Low.

Here, in the case where the motor vehicle 600 collides with a pedestrian, a local plastic deformation at the collision site is dominant. At positions away from the collision site, a vibration and an elastic deflection are produced due to the collision. Therefore, a difference in output change (acceleration change) occurs between the acceleration sensor installed closest to the collision site and the acceleration sensor installed away from the collision site. To be more specific, the acceleration sensor installed closest to the collision site has a large output change, and the acceleration sensor installed away from the collision site has a small output change. On the other hand, a vibration while the motor vehicle is traveling on a bad road or during operation of an ABS causes a front end portion of the motor vehicle to vibrate in a uniform manner. Therefore, output change characteristics of the three acceleration sensors 510L, 510C, 510R are equal.

That is, it is possible for a collision determination threshold value selection circuit 535L (in this case, the first collision determination threshold value selection circuit 535L) to identify whether the output change factor of the acceleration sensors is "a collision with a pedestrian" or "a vibration while the motor vehicle is traveling on a bad road or during operation of an ABS" based on the relationship between the integral value (the main velocity change VM) of the output signal of the acceleration sensor that corresponds to itself (in this case, the acceleration sensor 510L) and the integral values (the first sub velocity change VS1, the second sub velocity change VS2) of the output signals of the other acceleration sensors (in this case, the acceleration sensors 510C, 510R).

In the present embodiment, if the first sub velocity change VS1 and the second sub velocity change VS2 respectively exceed the sub circuit threshold value VS1_TH, VS2_TH in the period from the time when the main velocity change VM exceeds the main circuit high-side threshold value VM_TH_Hi to the time when the main velocity change VM reaches the low-side threshold value VM_TH_Low, then the output change factor is identified as "a vibration while the motor vehicle is traveling on a bad road or during operation of an ABS." On the other hand, if at least one of the first sub velocity change VS1 and the second sub velocity change VS2 does not exceed the corresponding sub circuit threshold value, then the output change factor is identified as "a collision with a pedestrian."

That is, in the case as shown in FIG 14A, the output change factor of the acceleration sensors can be identified as "a vibration while the motor vehicle is traveling on a bad road or during operation of an ABS." At this time, as shown in FIG. 14B, the output signal of the main comparison circuit 556 is at a high level in the period T1-T2. Furthermore, the output signal of the first sub comparison circuit 557 is at a high level in the interval that exceeds the sub circuit threshold value VS1_TH in the period T1-T2. Similarly, the output signal of the second sub comparison circuit 558 is at a high level in the interval that exceeds the sub circuit threshold value VS2_TH during the period T1-T2. As a result, a high-level signal is output from the AND circuit 560. Thereby, the high-side collision determination threshold value VL_TH_Hi is selected as the first collision determination threshold value VL_TH by the selection circuit 562. In this manner, if the output change factor of the acceleration sensors is identified as "a vibration while the motor vehicle is traveling on a bad road or during operation of an ABS," then a collision determination threshold value with a comparatively high value is selected so as to prevent an erroneous detection of a collision with a pedestrian.

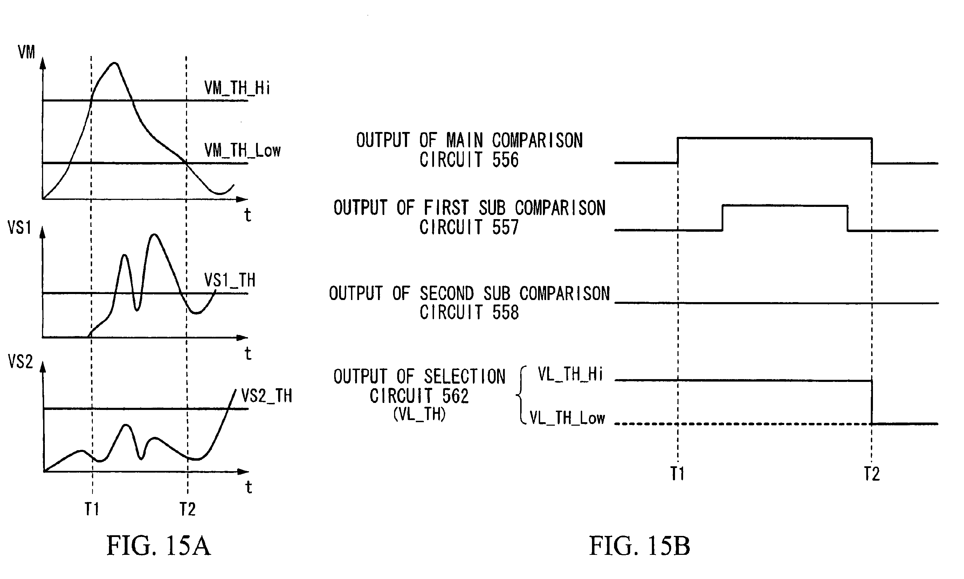

FIG. 15A shows a second case where it is assumed that the first sub velocity change VS1 exceeds the sub circuit threshold value VS1_TH but that the second sub velocity change VS2 does not exceed the sub circuit threshold value VS2_TH in a period T1-T2 from the time when the main velocity change VM exceeds the main circuit high-side threshold value VM_TH_Hi to the time when the main velocity change VM reaches the main circuit low-side threshold value VM_TH_Low.

In the case as shown in FIG 15A, the output change factor of the acceleration sensors can be identified as "a collision with a pedestrian." At this time, as shown in FIG 15B, the output signal of the main comparison circuit 556 is at a high level in the period T1-T2. Furthermore, the output signal of the first sub comparison circuit 557 is at a high level in the interval that exceeds the sub circuit threshold value VS1_TH in the period T1-T2. Similarly, the output signal of the second sub comparison circuit 558 is at a low level in the period T1-T2. As a result, a low-level signal is output from the AND circuit 560. Thereby, the low-side collision determination threshold value VL_TH_Low is selected as the first collision determination threshold value VL_TH by the selection circuit 562. In this manner, if the output change factor of the acceleration sensors is identified as "a collision with a pedestrian," then a collision determination threshold value with a comparatively low value is selected so as to securely detect a collision with a pedestrian.

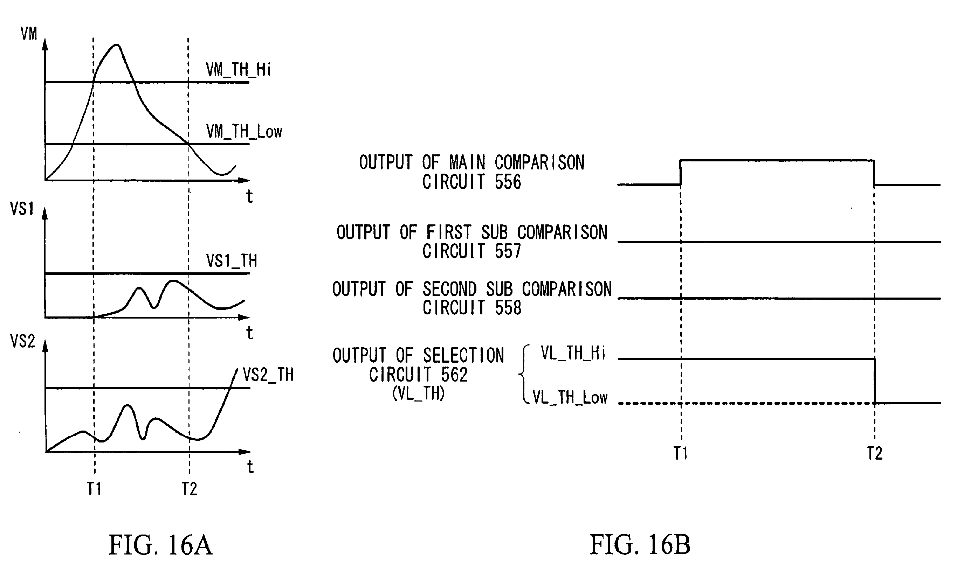

FIG 16A shows a third case where it is assumed that the first sub velocity change VS1 does not exceed the sub circuit threshold value VS1_TH, and also that the second sub velocity change VS2 does not exceed the sub circuit threshold value VS2_TH in a period T1-T2 from the time when the main velocity change VM exceeds the main circuit high-side threshold value VM_TH_Hi to the time when the main velocity change VM reaches the main circuit low-side threshold value VM_TH_Low.

In the case as shown in FIG. 16A, the output change factor of the acceleration sensors can be identified as "a collision with a pedestrian." At this time, as shown in FIG 16B, the output signal of the main comparison circuit 556 is at a high level in the period T1-T2. The output signals of the first sub comparison circuit 557 and the second sub comparison circuit 558 are at a low level in the period T1-T2. As a result, a low-level signal is output from the AND circuit 560. Thereby, the low-side collision determination threshold value VL_TH_Low is selected as the first collision determination threshold value VL_TH by the selection circuit 562.

The selection processing of a collision determination threshold value in step S503 of FIG 12 has been described above. Hereunder is a description of step S504 and beyond of FIG. 12. Note that the aforementioned selection processing of a collision determination threshold value is performed not only in the first collision determination threshold value selection circuit 535L, but also in the second collision determination threshold value selection circuit 535C and the third collision determination threshold value selection circuit 535R in a similar manner.

The first integral circuit 533L outputs a primary integral value (first velocity change VL) of the output signal of the acceleration sensor 510L that has been subjected to the digital transformation processing and the filtering processing to a non-inverting input terminal of the first comparison circuit 536L via the first delay circuit 534L (step S504). The second integral circuit 533C outputs a primary integral value (second velocity change VC) of the output signal of the acceleration sensor 510C that has been subjected to the digital transformation processing and the filtering processing to a non-inverting input terminal of the second comparison circuit 536C via the second delay circuit 534C (step S505). The third integral circuit 533R outputs a primary integral value (third velocity change VR) of the output signal of the acceleration sensor 510R that has been subjected to the digital transformation processing and the filtering processing to a non-inverting input terminal of the third comparison circuit 536R via the third delay circuit 534R (step S506).

The processes of the above steps S504 to S506 are performed in a parallel manner.

Then, the first comparison circuit 536L compares the first velocity change VL with the first collision determination threshold value VL_TH (step S507). If VL > VL_TH ("Yes"), the first comparison circuit 536L outputs a high-level signal which indicates that there has been a collision with a pedestrian to the collision determination circuit 539 via the first AND circuit 538L (step S508). The second comparison circuit 536C compares the second velocity change VC with the second collision determination threshold value VC_TH (step S509). If VC > VC_TH ("Yes"), the second comparison circuit 536C outputs a high-level signal which indicates that there has been a collision with a pedestrian to the collision determination circuit 539 via the second AND circuit 538C (step S510). The third comparison circuit 536R compares the third velocity change VR with the third collision determination threshold value VR_TH (step S511). If VR > VR_TH ("Yes"), the third comparison circuit 536R outputs a high-level signal which indicates that there has been a collision with a pedestrian to the collision determination circuit 539 via the third AND circuit 538R (step S512).

The processes of the above steps S507 to S512 are performed in a parallel manner.

Next, if at least one high-level signal is input, then the collision determination circuit 539 determines that there has been a collision with a pedestrian, and outputs a high-level signal indicative of the determination result to the engine hood control apparatus 540 (step S513). If a high-level signal is input from the collision determination circuit 539, that is, if it is determined that there has been a collision with a pedestrian, then the engine hood control apparatus 540 controls the power unit 580, to thereby lift the engine hood 630 (step S514).

If in all of steps S507, S509, S511, the determination is "No," that is, all the velocity changes are equal to the corresponding collision determination threshold value or below, the process returns to step S501 to continue monitoring a collision with a pedestrian.

As described above, according to the pedestrian protection system provided with the pedestrian collision detection apparatus according to the present embodiment, it is possible to correctly detect a collision with a pedestrian irrespective of the traveling condition of the motor vehicle 600. As a result, it is possible to securely protect a pedestrian at the time of collision.

Note that the present invention is not limited to the above second embodiment. Modifications as follows are conceivable.
(1) In the above second embodiment, the description has been made with reference to the case where three acceleration sensors 510L, 510C, 510R are installed in the front end portion of the motor vehicle, by way of example. However, the number of the acceleration sensors is not limited to this. It is permissible to find at least a relationship among the primary integral values (velocity changes) of the output signals of the acceleration sensors. Therefore, two or more acceleration sensors may be installed. Furthermore, in the above second embodiment, the description has been made with reference to the case where primary integral values (velocity changes) of the output signals of the acceleration sensors 510L, 510C, 510R are used, by way of example. However, secondary integral values (displacement amounts) may be used.
(2) In the above second embodiment, the case where the first safing circuit 537L, the second safing circuit 537C, and the third safing circuit 537R are provided has been shown by way of example. However, these safing circuits need not necessarily be provided. In the case where these safing circuits are not provided, the first AND circuit 538L, the second AND circuit 538C, and the third AND circuit 538R may be removed, and the outputs of the first comparison circuit 536L, the second comparison circuit 536C, and the third comparison circuit 536R may be directly connected to the collision determination circuit 539.
(3) In the above second embodiment, the description has been made on the assumption that the motor vehicle 600 of a front engine type is used. However, the present invention is also applicable to, for example, a motor vehicle of a midship engine type or of a rear engine type, because it is a common practice to install an openable hood over a trunk provided in a front portion of a motor vehicle.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A pedestrian collision detection apparatus, comprising:
a plurality of acceleration sensors (10L, 10C, 10R) installed in a front end portion (110) of a motor vehicle (100);
integral circuits (33L, 33C, 33R, 34L, 34C, 34R, 35L, 35C, 35R) that integrate output signals of respective acceleration sensors (10L, 10C, 10R);
collision determination threshold value setting circuits (36, 37) that set a collision determination threshold value for each of the acceleration sensors (10L, 10C, 10R) in accordance with a characteristic of a pedestrian and an output change factor of the acceleration sensors (10L, 10C, 10R), which are identified based on a relationship among integral values that are calculated by the integral circuits (33L, 33C, 33R, 34L, 34C, 34R, 35L, 35C, 35R) and correspond to the respective acceleration sensors (10L, 10C, 10R);
a collision determination circuit (40) that compares the integral values, calculated by the integral circuits (33L, 33C, 33R, 34L, 34C, 34R, 35L, 35C, 35R) and corresponding to the respective acceleration sensors (10L, 10C, 10R), with the collision determination threshold values that are set by the collision determination threshold value setting circuits (36, 37), and determines that the motor vehicle (100) has collided with a pedestrian if at least one of the integral values corresponding to the acceleration sensors (10L, 10C, 10R) exceeds the corresponding collision determination threshold value; and
a vehicle velocity sensor (20) that detects a vehicle velocity of the motor vehicle (100), wherein the collision determination threshold value setting circuits (36, 37) comprise:
a data processing circuit (36) which maintains the integral values calculated by the integral circuits (33L, 33C, 33R, 34L, 34C, 34R, 35L, 35C, 35R) and corresponding to the respective acceleration sensors (10L, 10C, 10R), so that the respective integral values are at maximum values thereof, and sets a difference between the greatest value and the smallest value among the maximum values of the integral values to a value of a first variant and sets the smallest value to a value of a second variant; and
a threshold value setting circuit (37) that, on a two-dimensional map made of a first axis related to the first variant and a second axis related to the second variant, sets a plurality of weight regions classified by the weight of the pedestrian along the second axis, in accordance with the vehicle velocity of the vehicle velocity sensor (20), and that sets a pedestrian identification threshold value for identifying whether or not the output change factor of the acceleration sensors (10L, 10C, 10R) is a collision with a pedestrian along the first axis for each of the weight regions and sets the collision determination threshold value for each of the acceleration sensors (10L, 10C, 10R) in accordance with the values of the first and second variants on the two-dimensional map which are set by the data processing circuit (36),
**characterized in that**:
the integral circuits (33L, 33C, 33R, 34L, 34C, 34R, 35L, 35C, 35R) comprise:
short interval integral circuits (33L, 33C, 33R) that integrate the respective output signals of the acceleration sensors (10L, 10C, 10R) over a predetermined time interval;
long interval integral circuits (34L, 34C, 34R) that integrate the respective output signals of the acceleration sensors (10L, 10C, 10R) over a time interval longer than the predetermined time interval; and
longest interval integral circuits (35L, 35C, 35R) that integrate the respective output signals of the acceleration sensors (10L, 10C, 10R) over a time interval that is required for monitoring a collision with a pedestrian at least during operation of the apparatus itself;
the data processing circuit (36) sets values of the first and second variants based on integral values which are calculated by the longest interval integral circuits (35L, 35C, 35R) and correspond to the acceleration sensors (10L, 10C, 10R);
the threshold value setting circuit (37) sets, in accordance with the values of the first and second variants on the two-dimensional map that are set by the data processing circuit (36), a short interval collision determination threshold value and a long interval collision determination threshold value for each of the acceleration sensors (10L, 10C, 10R), a short interval collision determination threshold value being for comparison with the integral values which are calculated by the short interval integral circuits (33L, 33C, 33R) and correspond to the acceleration sensors (10L, 10C, 10R), and the long interval collision determination threshold value being for comparison with the integral values which are calculated by the long interval integral circuits (34L, 34C, 34R) and correspond to the acceleration sensors (10L, 10C, 10R); and
the collision determination circuit (40) comprises:
short interval comparison circuits (38L, 38C, 38R) that compare the integral values, calculated by the short interval integral circuits (33L, 33C, 33R) and corresponding to the acceleration sensors (10L, 10C, 10R), with the short interval collision determination threshold value which is set by the threshold value setting circuit (37);
long interval comparison circuits (39L, 39C, 39R) that compare the integral values, calculated by the long interval integral circuits (34L, 34C, 34R) and corresponding to the acceleration sensors (10L, 10C, 10R), with the long interval collision determination threshold value which is set by the threshold value setting circuit; and
a determination circuit (40) that determines that there has been a collision with a pedestrian if at least one of the integral values corresponding to the acceleration sensors (10L, 10C, 10R) from the short interval comparison circuits (38L, 38C, 38R) and the long interval comparison circuit (39L, 39C, 39R) is determined to have exceeded either the short interval collision determination threshold value or the long interval collision determination threshold value.

2. The pedestrian collision detection apparatus according to claim 1, further comprising filters (32L, 32C, 32R) for removing noise due to vibration while the motor vehicle (100) is traveling, the noise being superimposed on the output signals of the acceleration sensors (10L, 10C, 10R).

3. A pedestrian protection system that lifts a hood (130) provided to the motor vehicle (100) when a front end portion of a motor vehicle (100) collides with a pedestrian, to thereby alleviate an injury of the pedestrian, the pedestrian protection system comprising:
an actuator (50) for lifting the hood (130);
a pedestrian collision detection apparatus according to claim 1 or 2; and
a control apparatus (41) that controls the actuator (50), to thereby lift the hood (130) if the pedestrian collision detection apparatus determines that there has been a collision with the pedestrian.

## Patentansprüche

1. Fußgängerkollisionserfassungsvorrichtung, umfassend:
mehrere Beschleunigungssensoren (10L, 10C, 10R), die an einem vorderen Teil (110) eines Kraftfahrzeugs (100) installiert sind;
Integralschaltungen (33L, 33C, 33R, 34L, 34C, 34R, 35L, 35C, 35R), die Ausgangssignale der jeweiligen Beschleunigungssensoren (10L, 10C, 10R) integrieren;
Kollisionsbestimmungsschwellenwert-Einstellschaltungen (36, 37), die einen Kollisionsbestimmungsschwellenwert für jeden der Beschleunigungssensoren (10L, 10C, 10R) entsprechend einer Charakteristik eines Fußgängers und eines Ausgabeänderungsfaktors der Beschleunigungssensoren (10L, 10C, 10R) einstellen, die auf der Grundlage einer Beziehung zwischen Integralwerten identifiziert werden, die von den Integralschaltungen (33L, 33C, 33R, 34L, 34C, 34R, 35L, 35C, 35R) berechnet werden und den jeweiligen Beschleunigungssensoren (10L, 10C, 10R) entsprechen;
eine Kollisionsbestimmungsschaltung (40), die die Integralwerte, die von den Integralschaltungen (33L, 33C, 33R, 34L, 34C, 34R, 35L, 35C, 35R) berechnet worden sind und die den jeweiligen Beschleunigungssensoren (10L, 10C, 10R) entsprechen, mit den Kollisionsbestimmungsschwellenwerten vergleicht, die von den Kollisionsbestimmungsschwellenwert-Einstellschaltungen (36, 37) eingestellt worden sind, und feststellt, dass das Kraftfahrzeug (100) mit einem Fußgänger kollidiert ist, wenn wenigstens einer der Integralwerte, die den Beschleunigungssensoren (10L, 10C, 10R) entsprechen, den entsprechenden Kollisionsbestimmungsschwellenwert überschreitet; und
einen Fahrzeuggeschwindigkeitssensor (20), der eine Fahrzeuggeschwindigkeit des Kraftfahrzeugs (100) erfasst, wobei die Kollisionsbestimmungsschwellenwert-Einstellschaltungen (36, 37) umfassen:
eine Datenverarbeitungsschaltung (36), die die Integralwerte, die von den Integralschaltungen (33L, 33C, 33R, 34L, 34C, 34R, 35L, 35C, 35R) berechnet worden sind und den jeweiligen Beschleunigungssensoren (10L, 10C, 10R) entsprechen, hält, so dass die jeweiligen Integralwerte auf ihren maximalen Werten stehen, und eine Differenz zwischen dem größten Wert und dem kleinsten Wert unter den maximalen Werten der Integralwerte auf einen Wert einer ersten Variante einstellt und den kleinsten Wert auf einen Wert einer zweiten Variante einstellt; und
eine Schwellenwerteinstellschaltung (37), die auf einem zweidimensionalen Kennfeld, das aus einer ersten Achse bezogen auf die erste Variante und einer zweiten Achse bezogen auf die zweite Variante besteht, mehrere Gewichtsgebiete, klassifiziert durch das Gewicht des Fußgängers längs der zweiten Achse, entsprechend der Fahrzeuggeschwindigkeit des Fahrzeuggeschwindigkeitssensors (20) einstellt, und die einen Fußgängeridentifizierungsschwellenwert zum Identifizieren, ob der Ausgabeänderungsfaktor der Beschleunigungssensoren (10L, 10C, 10R) eine Kollision mit einem Fußgänger ist, oder nicht, längs der ersten Achse für jedes der Gewichtsgebiete einstellt und den Kollisionsbestimmungsschwellenwert für jeden der Beschleunigungssensoren (10L, 10C, 10R) entsprechend den Werten der ersten und zweiten Varianten auf dem zweidimensionalen Kennfeld, die von der Datenverarbeitungsschaltung (36) eingestellt worden sind, einstellt,
**dadurch gekennzeichnet, dass**:
die Integralschaltungen (33L, 33C, 33R, 34L, 34C, 34R, 35L, 35C, 35R) umfassen:
Kurzintervall-Integralschaltungen (33L, 33C, 33R), die die jeweiligen Ausgangssignale der Beschleunigungssensoren (10L, 10C, 10R) über ein vorgegebenes Zeitintervall integrieren;
Langintervall-Integralschaltungen (34L. 34C, 34R), die die jeweiligen Ausgangssignale der Beschleunigungssensoren (10L, 10C, 10R) über ein Zeitintervall integrieren, das länger ist, als das vorgegebene Zeitintervall; und
Längstintervall-Integralschaltungen (35L, 35C, 35R), die die jeweiligen Ausgangssignale der Beschleunigungssensoren (10L, 10C, 10R) über ein Zeitintervall integrieren, das erforderlich ist, um eine Kollision mit einem Fußgänger wenigstens während des Betriebs der Vorrichtung selbst zu überwachen;
die Datenverarbeitungsschaltung (36) Werte der ersten und zweiten Varianten auf der Grundlage von Integralwerten einstellt, die von den Längstintervall-Integralschaltungen (35L, 35C, 35R) berechnet worden sind und den Beschleunigungssensoren (10L, 10C, 10R) entsprechen;
die Schwellenwerteinstellschaltung (37) entsprechend den Werten der ersten und zweiten Varianten auf dem zweidimensionalen Kennfeld, die von der Datenverarbeitungsschaltung (36) eingestellt worden sind, einen Kurzintervall-Kollisionsbestimmungsschwellenwert und einem Langintervall-Kollisionsbestimmungsschwellenwert für jeden der Beschleunigungssensoren (10L, 10C, 10R) einstellt, wobei ein Kurzintervall-Kollisionsbestimmungsschwellenwert für einen Vergleich mit den Integralwerten vorgesehen ist, die von den Kurzintervall-Integralschaltungen (33L, 33C, 33R) berechnet worden sind und den Beschleunigungssensoren (10L, 10C, 10R) entsprechen, und der Langintervall-Kollisionsbestimmungsschwellenwert für einen Vergleich mit Integralwerten vorgesehen ist, die von den Langintervall-Integralschaltungen (34L, 34C, 34R) berechnet worden sind und den Beschleunigungssensoren (10L, 10C, 10R) entsprechen; und
die Kollisionsbestimmungsschaltung (40) umfasst:
Kurzintervall-Vergleichsschaltungen (38L, 38C, 38R) die die Integralwerte, die von den Kurzintervall-Integralschaltungen (33L, 33C, 33R) berechnet worden sind und den Beschleunigungssensoren (10L, 10C, 10R) entsprechen, mit dem Kurzintervall-Kollisionsbestimmungsschwellenwert vergleichen, der von der Schwellenwerteinstellschaltung (37) eingestellt worden ist;
Langintervall-Vergleichsschaltungen (39L, 39C, 39R) die die Integralwerte, die von den Langintervall-Integralschaltungen (34L, 34C, 34R) berechnet worden sind und den Beschleunigungssensoren (10L, 10C, 10R) entsprechen, mit dem Langintervall-Kollisionsbestimmungsschwellenwert vergleichen, der von der Schwellenwerteinstellschaltung eingestellt worden ist; und
eine Bestimmungsschaltung (40), die bestimmt, dass eine Kollision mit einem Fußgänger stattgefunden hat, wenn wenigstens einer der Integralwerte, die den Beschleunigungssensoren (10L, 10C, 10R) entsprechen, von den Kurzintervall-Vergleichsschaltungen (38L, 38C, 38R) und den Langintervall-Vergleichsschaltungen (39L, 39C, 39R) als entweder den Kurzintervall-Kollisionsbestimmungsschwellenwert oder den Langintervall-Kollisionsbestimmungsschwellenwert überschreitend festgestellt worden ist.

2. Fußgängerkollisionserfassungsvorrichtung nach Anspruch 1, die ferner Filter (32L, 32C, 32R) umfasst zum Beseitigen von Störungen aufgrund von Schwingungen, während das Kraftfahrzeug (100) fährt, wobei die Störungen den Ausgangssignalen der Beschleunigungssensoren (10L, 10C, 10R) überlagert sind.

3. Fußgängerschutzsystem, das eine Motorhaube (130), die an dem Kraftfahrzeug (100) vorgesehen ist, anhebt, wenn ein vorderer Teil eines Kraftfahrzeugs (100) mit einem Fußgänger kollidiert, um somit eine Verletzung des Fußgängers zu mindern, wobei das Fußgängerschutzsystem umfasst:
einen Aktuator (50) zum Anheben der Motorhaube (130);
eine Fußgängerkollisionserfassungsvorrichtung nach Anspruch 1 oder 2; und
eine Steuervorrichtung (41), die den Aktuator (50) steuert, um somit die Motorhaube (130) anzuheben, wenn die Fußgängerkollisionserfassungsvorrichtung feststellt, dass eine Kollision mit einem Fußgänger stattgefunden hat.

## Revendications

1. Dispositif de détection de collision de piétons comprenant :
une pluralité de capteurs (10L, 10C, 10R) d'accélération installée dans une partie (110) d'extrémité avant d'un véhicule (100) à moteur ;
des circuits (33L, 33C, 33R, 34L, 34C, 34R, 35L, 35C, 35R) d'intégration qui intègrent des signaux de sortie de capteurs (10L, 10C, 10R) d'accélération respectifs ;
des circuits (36, 37) fixant une valeur de seuil de détermination de collision, qui fixent une valeur de seuil de détermination de collision pour chacun des capteurs (10L, 10C, 10R) d'accélération, en fonction d'une caractéristique d'un piéton et d'un facteur de modification de sortie des capteurs (10L, 10C, 10R) d'accélération, qui sont identifiés sur la base d'une relation entre des valeurs d'intégration qui sont calculées par les circuits (33L, 33C, 33R, 34L, 34C, 34R, 35L, 35C, 35R) d'intégration et correspondent aux capteurs (10L, 10C, 10R) d'accélération respectifs ;
un circuit (40) de détermination de collision, qui compare les valeurs d'intégration calculées par les circuits (33L, 33C, 33R, 34L, 34C, 34R, 35L, 35C, 35R) d'intégration et correspondant aux capteurs (10L, 10C, 10R) d'accélération respectifs aux valeurs de seuils de détermination de collision qui sont fixées par les circuits (36, 37) de fixation de valeurs de seuil de détermination de collision et déterminent que le véhicule (100) à moteur est entré en collision avec un piéton si au moins l'une des valeurs d'intégration correspondant aux capteurs (10L, 10C, 10R) d'accélération dépassent la valeur de seuil de détermination de collision correspondante ; et
un capteur (20) de la vitesse du véhicule, qui détecte une vitesse du véhicule (100) à moteur, dans lequel les circuits (36, 37) de fixation d'une valeur de seuil de détermination de collision comprennent:
un circuit (36) de traitement de données, qui conserve les valeurs d'intégration calculées par les circuits (33L, 33C, 33R, 34L, 34C, 34R, 35L, 35C, 35R) d'intégration et correspondant aux capteurs (10L, 10C, 10R) d'accélération respectifs de sorte que les valeurs d'intégration en sont les valeurs maximum et fixe une différence entre la valeur la plus grande et la valeur la plus petite parmi les valeurs maximum des valeurs d'intégration à une valeur d'une première variante et fixe la valeur la plus petite à une valeur d'une deuxième variante ; et
un circuit (37) de fixation d'une valeur de seuil, qui, sur une carte en deux dimensions faite d'un premier axe se rapportant à la première variante et d'un deuxième axe se rapportant à la deuxième variante, fixe une pluralité de régions de poids classées par le poids des piétons le long du deuxième axe en fonction de la vitesse du véhicule donnée par le capteur (20) de la vitesse du véhicule et qui fixe une valeur de seuil d'identification d'un piéton pour identifier si ou non le facteur de modification de sortie des capteurs (10L, 10C, 10R) d'accélération est une collision avec un piéton le long du premier axe pour que chacune des régions de poids et fixe la valeur de seuil de détermination d'une collision pour chacun des capteurs (10L, 10C, 10R) d'accélération en fonction des valeurs des première et deuxième variantes sur la carte en deux dimensions, qui sont fixées par le circuit (36) de traitement de données,
**caractérisé en ce que**
les circuits (33L, 33C, 33R, 34L, 34C, 34R, 35L, 35C, 35R) d'intégration comprennent :
des circuits (33L, 33C, 33R) d'intégration à intervalle court, qui intègrent les signaux respectifs de sortie des capteurs (10L, 10C, 10R) d'accélération sur un intervalle de temps déterminé à l'avance ;
des circuits (34L, 34C, 34R) d'intégration à intervalle long, qui intègrent les signaux de sortie respectifs des capteurs (10L, 10C, 10R) d'accélération sur un intervalle de temps plus long que l'intervalle de temps déterminé à l'avance ; et
des circuits (35L, 35C, 35R) d'intégration à intervalle très long, qui intègrent les signaux respectifs de sortie des capteurs (10L, 10C, 10R) d'accélération sur un intervalle de temps qui est nécessaire pour contrôler une collision avec un piéton au moins pendant le fonctionnement du dispositif soi-même ;
le circuit (36) de traitement de données fixe des valeurs de la première et de la deuxième variantes sur la base de valeurs d'intégration qui sont calculées par les circuits (35L, 35C, 35R) d'intégration à intervalle très long et correspondent aux capteurs (10L, 10C, 10R) d'accélération ;
le circuit (37) de fixation de valeurs de seuil fixe, en fonction des valeurs des première et deuxième variantes sur la carte en deux dimensions qui sont fixées par le circuit (36) de traitement de données, une valeur de seuil de détermination de collision à intervalle court et une valeur de seuil de détermination de collision à intervalle long pour chacun des capteurs (10L, 10C, 10R) d'accélération, une valeur de seuil de détermination de collision à intervalle court étant destinée à une comparaison avec les valeurs d'intégration qui sont calculées par les circuits (33L, 33C, 33R) d'intégration à intervalle court et correspondent aux capteurs (10L, 10C, 10R) d'accélération et la valeur de seuil de détermination de collision à intervalle long étant destinée à une comparaison avec les valeurs d'intégration qui sont calculées par les circuits (34L, 34C, 34R) d'intégration à intervalle long et correspondent aux capteurs (10L, 10C, 10R) d'accélération ; et
le circuit (40) de collision comprend;
des circuits (38L, 38C, 38R) de comparaison à intervalle court, qui comparent les valeurs d'intégration calculées par les circuits (33L, 33C, 33R) d'intégration à intervalle court et correspondant aux capteurs (10L, 10C, 10R) d'accélération à la valeur de seuil de détermination de collision à intervalle court qui est fixée par le circuit (37) de fixation de valeur de seuil ;
des circuits (39L, 39C, 39R) de comparaison à intervalle long, qui comparent les valeurs d'intégration calculées par les circuits (34L, 34C, 34R) d'intégration à intervalle long et correspondant aux capteurs (10L, 10C, 10R) d'accélération à la valeur de seuil de détermination de collision à intervalle long qui est fixée par le circuit de fixation de valeur de seuil ; et
un circuit (40) de détermination, qui détermine s'il y a eu une collision avec un piéton si au moins l'une des valeurs d'intégration correspondant aux capteurs (10L, 10C, 10R) d'accélération provenant des circuits (38L, 38C, 38R) de comparaison à intervalle court et le circuit (39L, 39C, 39R) de comparaison à intervalle long est déterminé comme ayant excédé soit la valeur de seuil de détermination de collision à intervalle court, soit la valeur de seuil de détermination de collision à intervalle long.

2. Dispositif de détection de collision de piétons suivant la revendication 1, comprenant en outre des filtres (32L, 32C, 32R) pour éliminer du bruit dû à une vibration tandis que le véhicule (100) à moteur roule, le bruit étant superposé aux signaux de sortie des capteurs (10L, 10C, 10R) d'accélération.

3. Système de protection de piétons qui soulève un capot (130) prévu sur le véhicule (100) à moteur, lorsqu'une partie d'extrémité avant d'un véhicule (100) un moteur entre en collision avec un piéton pour diminuer le tort porté au piéton, le système de protection de piéton comprenant:
un actionneur (50) pour soulever le capot (130) ;
un dispositif de détection de collision de piétons suivant la revendication 1 ou 2 ; et
un dispositif de commande qui commande l'actionneur (50) pour ainsi soulever le capot (130) si le dispositif de détection de collision de piétons détermine qu'il y a eu une collision avec le piéton.
